(19) **Europäisches Patentamt**
**European Patent Office**
**Office européen des brevets**

(11) **EP 3 842 990 B1**

(12) **EUROPEAN PATENT SPECIFICATION**

(45) Date of publication and mention
of the grant of the patent:
**27.08.2025 Bulletin 2025/35**

(21) Application number: **19861630.2**

(22) Date of filing: **17.09.2019**

(51) International Patent Classification (IPC):
*G06V 40/16* (2022.01)    *G06V 10/772* (2022.01)

(52) Cooperative Patent Classification (CPC):
**G06V 40/168; G06V 10/772; G06V 40/172**

(86) International application number:
**PCT/CN2019/106216**

(87) International publication number:
**WO 2020/057509 (26.03.2020 Gazette 2020/13)**

(54) **FACE RECOGNITION METHOD AND DEVICE**

GESICHTSERKENNUNGSVERFAHREN UND -VORRICHTUNG

PROCÉDÉ ET DISPOSITIF DE RECONNAISSANCE FACIALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.09.2018 CN 201811090801**

(43) Date of publication of application:
**30.06.2021 Bulletin 2021/26**

(73) Proprietor: **HUAWEI TECHNOLOGIES CO., LTD.**
**Shenzhen, Guangdong 518129 (CN)**

(72) Inventors:
• **HUANG, Xiaolin**
**Shenzhen, Guangdong 518129 (CN)**
• **HUANG, Wei**
**Shenzhen, Guangdong 518129 (CN)**
• **LIU, Gang**
**Shenzhen, Guangdong 518129 (CN)**
• **HU, Xin**
**Shenzhen, Guangdong 518129 (CN)**

(74) Representative: **Goddar, Heinz J. et al**
**Boehmert & Boehmert**
**Anwaltspartnerschaft mbB**
**Pettenkoferstrasse 22**
**80336 München (DE)**

(56) References cited:
CN-A- 103 136 516    CN-A- 104 700 087
CN-A- 108 256 405    CN-A- 108 256 405
US-A1- 2005 084 140    US-A1- 2012 257 800

• REALE CHRISTOPHER ET AL: "Coupled
dictionaries for thermal to visible face
recognition", 2014 IEEE INTERNATIONAL
CONFERENCE ON IMAGE PROCESSING (ICIP),
IEEE, 27 October 2014 (2014-10-27), pages 328 -
332, XP032966610, DOI: 10.1109/
ICIP.2014.7025065
• MAILHÉ BORIS ET AL: "Fixed points of
dictionary learning algorithms for sparse
representations", HAL OPEN SCIENCE
(HAL-00807545), 1 January 2013 (2013-01-01),
pages 1 - 12, XP093083964, Retrieved from the
Internet <URL:https://inria.hal.science/
hal-00807545/document> [retrieved on
20230920]
• RAKOTOMAMONJY A ET AL: "Greedy methods,
randomization approaches and multi-arm bandit
algorithms for efficient sparsity-constrained
optimization", HAL OPEN SCIENCE
(HAL-01182801V1), 1 January 2016 (2016-01-01),
pages 1 - 29, XP093083969, Retrieved from the
Internet <URL:https://hal.science/
hal-01182801v1/file/inexact.pdf> [retrieved on
20230920]

## Description

## TECHNICAL FIELD

This application relates to the field of computer technologies, and in particular, to a facial recognition method and device.

## BACKGROUND

Because a biometric feature-based recognition technology of facial recognition is contactless, the technology has a broad development and application prospect in the vehicle field. In-vehicle facial recognition is a technology of performing identity authentication or identity searching by using a camera inside a vehicle. A conventional facial recognition technology obtains a face image in a visible light modality. Because an in-vehicle scenario of poor lighting in a garage or at night, for example, often occurs, a degree of recognizing an identity of a character using a face image in the visible light modality in the in-vehicle scenario is relatively low. Therefore, a near-infrared camera that is not affected by ambient light is used in most cases of the in-vehicle scenario.

The near-infrared camera emits infrared light that is invisible to a naked eye, to illuminate a photographed object and generate an image obtained through infrared reflection. Therefore, an image that is invisible to the naked eye can be photographed even in a dark environment, and this is applicable to in-vehicle scenarios. However, images photographed by the near-infrared camera and a visible light camera come from different modalities. Because photosensitivity processes of cameras in different modalities are different, there is a relatively large difference between images obtained by the cameras in different modalities for a same object. Consequently, a recognition degree of in-vehicle facial recognition is reduced. For example, a user has performed identity authentication on an in-vehicle device by using a face image in the visible light modality. When the same user performs identity authentication on the same in-vehicle device by using a face image in a near-infrared modality, because there is a relatively large difference between the image in the near-infrared modality and the image in the visible light modality, it is very likely that authentication on an identity of the user cannot succeed.

At a present stage, most cross-modal facial recognition methods use a deep learning algorithm that is based on a convolutional neural network. In the method, same preprocessing is first performed on a face image in a visible light modality and a face image in a near-infrared modality, and then a deep convolutional neural network is pretrained by using a preprocessed face image in the visible light modality, to provide prior knowledge for cross-modal image-based deep convolutional neural network training. Then the face image in the visible light modality and the face image in the near-infrared modality form a triplet according to a preset rule, and a difficult triplet difficult to distinguish in the pretrained cross-modal image-based deep convolutional neural network is selected. The selected difficult triplet is input into the pretrained cross-modal image-based deep convolutional neural network to perform fine tuning, and selection and fine tuning of the difficult triplet are iterated until performance of the cross-modal image-based deep convolutional neural network is no longer improved. Finally, cross-modal facial recognition is performed by using a trained cross-modal image-based deep convolutional neural network model.

The difficult triplet is an important factor that affects performance of the foregoing algorithm. However, in actual application, because a large amount of training data is required for deep learning of the convolutional neural network, it is difficult to select a difficult sample triplet. Therefore, overfitting of the network tends to occur, and an identity recognition degree is reduced. In addition, calculation of the convolutional neural network needs to be accelerated by using a graphics processing unit (graphics processing unit, GPU). On a device without a GPU, a neural network-based algorithm operation speed is relatively low, and a real-time requirement cannot be met.

The research paper "Coupled dictionaries for thermal to visible face recognition" by C. Reale, N. M. Nasrabadi and R. Chellappa, IEEE International Conference on Image Processing, 27 October 2014, pp. 328 - 332, describes a method for identifying a thermal infrared face image given a gallery of visible light face images. The method includes learning coupled dictionaries to represent the two domains. The dictionaries shall provide a sparse representation, which transforms the data into a single, domain-independent, latent space. The dictionary learning problem is formulated as a so-called bilevel optimization problem (an optimization problem, which contains a constraint that is formulated as another optimization problem). A stochastic gradient descent algorithm is used to provide an approximate solution to the bilevel optimization problem.

CN 108 256 405 A describes a face recognition method used for performing matching recognition on a face image acquired under visible light conditions and a face image acquired under near-infrared light conditions. The face recognition method comprises: acquiring a to be recognized face image under near-infrared light conditions; determining a first feature vector of the to be recognized face image; determining a second feature vector of the to be recognized face image in a common subspace based on the first feature vector; and determining the matching recognition result of the to be recognized face image and the target face image according to the second feature vector and a pre-determined third feature vector, wherein the target face image is acquired in advance under visible light conditions, and the third feature vector is a feature vector of the acquired target face image in the common subspace. The article "Fixed points of dictionary learning algorithms for sparse representations" by B. Mailhé et al., HAL open science hal-00807545, Apr. 2013, compares dictionary learning algorithms for sparse representations, wherein the Sparsenet, the method of optimal directions, and K-SVD are compared.

The article "Greedy Greedy methods, randomization approaches and multi-arm bandit algorithms for efficient sparsity-constrained optimization" by A. Rakotomamonjy et al., HAL open science hal-01182801v1, Aug. 2015, describes several methods for computing sparse approximate solutions to optimization problems, including matching pursuit.

**SUMMARY**

Embodiments of this application provide a facial recognition method and device, so that a cross-modal facial recognition speed can be increased, thereby meeting a real-time requirement.

According to a first aspect, an embodiment of this application provides a facial recognition method. The method includes: obtaining a first face image and a second face image, where the first face image is a current face image obtained by a camera, the second face image is a stored reference face image, a modality of the first face image is a near-infrared modality, and a modality of the second face image is a visible light modality; determining that the modality of the first face image is not the same as the modality of the second face image; separately mapping the first face image and the second face image to a cross-modal space, to obtain a first sparse facial feature of the first face image in the cross-modal space and a second sparse facial feature of the second face image in the cross-modal space, where the cross-modal space is a color space in which both a feature of the first face image and a feature of the second face image may be represented; and performing facial recognition on the first face image based on the first sparse facial feature and the second sparse facial feature.

In this manner, the first face image and the second face image in different modalities are mapped to the same cross-modal space by using a sparse representation method, and then facial recognition is performed on the first face image based on the first sparse facial feature obtained by mapping the first face image and the second sparse facial feature of the second face image. This facial recognition manner does not depend on acceleration of a GPU, reducing a requirement on a hardware device, increasing a facial recognition speed, and meeting a real-time requirement on facial recognition. In addition, the sparse representation method has a relatively low requirement on a data volume, so that an overfitting problem can be avoided.

Further, according to the first aspect, the separately mapping the first face image and the second face image to a cross-modal space, to obtain a first sparse facial feature of the first face image in the cross-modal space and a second sparse facial feature of the second face image in the cross-modal space includes: obtaining a first dictionary corresponding to the modality of the first face image and a second dictionary corresponding to the modality of the second face image; mapping the first face image to the cross-modal space based on the first dictionary corresponding to the modality of the first face image, to obtain the first sparse facial feature of the first face image in the cross-modal space; and mapping the second face image to the cross-modal space based on the second dictionary corresponding to the modality of the second face image, to obtain the second sparse facial feature of the second face image in the cross-modal space.

Further, according to the first aspect, the obtaining a first dictionary corresponding to the modality of the first face image and a second dictionary corresponding to the modality of the second face image includes: obtaining a feature representation matrix of a face image sample in the cross-modal space based on a first facial feature, a second facial feature, and an initialization dictionary by using a matching pursuit MP algorithm, where the first facial feature is a facial feature of the face image sample in the modality of the first face image, and the second facial feature is a facial feature of the face image sample in the modality of the second face image; and determining, based on the first facial feature, the second facial feature, and the feature representation matrix by using a method of optimal directions MOD algorithm, the first dictionary corresponding to the modality of the first face image and the second dictionary corresponding to the modality of the second face image. In this manner, the first dictionary corresponding to the modality of the first face image and the second dictionary corresponding to the modality of the second face image may be determined at the same time, so that a facial recognition speed is increased.

With reference to the first aspect, in an optional implementation, the obtaining a feature representation matrix of the face image sample in the cross-modal space based on the first facial feature, the second facial feature, and an initialization dictionary by using a matching pursuit MP algorithm includes: solving a formula $\hat{x}_i = \arg_x^{min} \left\| y_i - D_{(0)} x \right\|_2^2 \ subject\ to \|x\|_n \leq K$ by using the matching pursuit MP algorithm, to obtain the feature representation matrix of the face image sample in the cross-modal space, where $1 < i < M$, $y_i$ is an $i$th column vector in a matrix $Y$ including the first facial feature and the second facial feature, the first row vector to an $M$th row vector in the matrix $Y$ are the first facial feature, an $(M+1)$th row vector to a $(2M)$th row vector are the second facial feature, $\hat{x}_i$ is an $i$th column vector in the feature representation matrix in the cross-modal space, $D_{(0)}$ is the initialization dictionary, n represents a constraint manner of sparsing, and $K$ is sparsity.

With reference to the first aspect, in an optional implementation, the determining, based on the first facial feature, the second facial feature, and the feature representation matrix by using a method of optimal directions MOD algorithm, the first dictionary corresponding to the modality of the first face image and the second dictionary corresponding to the modality of the second face image includes: solving a formula $D = arg_X^{min}\|Y - DX\|_F^2 = YX^T(XX^T)^{-1}$ by using the method of optimal directions MOD algorithm, to obtain the first dictionary corresponding to the modality of the first face image and the second dictionary corresponding to the modality of the second face image, where $D$ is a matrix including the first dictionary corresponding to the modality of the first face image and the second dictionary corresponding to the modality of the second face image, and $X$ is the feature representation matrix.

With reference to the first aspect, in an optional implementation, $D$ includes M column vectors and 2M row vectors, a matrix including the first row vector to an $M^{th}$ row vector is the first dictionary corresponding to the modality of the first face image, and a matrix including an $(M+1)^{th}$ row vector to a $(2M)^{th}$ row vector is the second dictionary corresponding to the modality of the second face image.

With reference to the first aspect, in an optional implementation, the mapping the first face image to the cross-modal space based on the first dictionary corresponding to the modality of the first face image, to obtain the first sparse facial feature of the first face image in the cross-modal space includes: determining, based on the first dictionary corresponding to the modality of the first face image and a penalty coefficient, a first projection matrix corresponding to the modality of the first face image; and calculating the first sparse facial feature of the first face image in the cross-modal space by using the first projection matrix corresponding to the modality of the first face image and the first face image.

With reference to the first aspect, in an optional implementation, the mapping the second face image to the cross-modal space based on the second dictionary corresponding to the modality of the second face image, to obtain the second sparse facial feature of the second face image in the cross-modal space includes: determining, based on the second dictionary corresponding to the modality of the second face image and a penalty coefficient, a second projection matrix corresponding to the modality of the second face image; and calculating the second sparse facial feature of the second face image in the cross-modal space by using the second projection matrix corresponding to the modality of the second face image and the second face image.

With reference to the first aspect, in an optional implementation, the determining that the modality of the first face image is not the same as the modality of the second face image includes: separately transforming the first face image and the second face image from a red-green-blue RGB color space to a YCbCr space of a luma component, a blue-difference chroma component, and a red-difference chroma component; determining a color coefficient value of the first face image and a color coefficient value of the second face image based on a value of the first face image in the YCbCr space and a value of the second face image in the YCbCr space; and determining, based on the color coefficient value of the first face image and the color coefficient value of the second face image, that the modality of the first face image is not the same as the modality of the second face image.

With reference to the first aspect, in an optional implementation, that the modality of the first face image is different from the modality of the second face image means that one of the color coefficient value of the first face image and the color coefficient value of the second face image is greater than a first threshold, and the other color coefficient value is not greater than the first threshold.

With reference to the first aspect, in an optional implementation, the sparsing is a manner of representing an original face image feature by using a linear combination of column vectors selected from a dictionary, and a manner of selecting a column vector is one of 0-norm constraint, 1-norm constraint, and 2-norm constraint.

With reference to the first aspect, in an optional implementation, the sparsing is a manner of representing an original face image feature by using a linear combination of column vectors selected from a dictionary, and a manner of selecting a column vector is the 2-norm constraint. In this manner, in a solving process, the 2-norm constraint is used to loosen a limitation on sparsing, so that an analytical solution exists for formula calculation, a problem of a relatively long operation time caused by a plurality of iterative solving processes is avoided, and a dictionary obtaining speed is further increased.

With reference to the first aspect, in an optional implementation, the performing facial recognition on the first face image based on the first sparse facial feature and the second sparse facial feature includes: calculating a similarity between the first sparse facial feature and the second sparse facial feature; and if the similarity is greater than a similarity threshold, determining that a facial recognition result is success; or if the similarity is less than or equal to the similarity threshold, determining that the facial recognition result of the first face image is failure.

According to a second aspect, an embodiment of this application provides a facial recognition device. The device includes an obtaining unit, a determining unit, a mapping unit, and a recognition unit. The obtaining unit is configured to obtain a first face image and a second face image, where the first face image is a current face image obtained by a camera, the second face image is a stored reference face image, a modality of the first face image is a near-infrared modality, and a modality of the second face image is a visible light modality. The determining unit is configured to determine that the modality of the first face image is not the same as the modality of the second face image. The mapping unit is configured to separately map the first face image and the second face image to a cross-modal space, to obtain a first sparse facial feature of the first face image in the cross-modal space and a second sparse facial feature of the second face image in the cross-modal space, where the cross-modal space is a color space in which both the feature of the first face image and the feature of the second face image may be represented. The recognition unit is configured to perform facial recognition on the first face image based on the first sparse facial feature and the second sparse facial feature.

According to this device, the first face image and the second face image in different modalities may be mapped to the same cross-modal space by using a sparse representation method, and then facial recognition is performed on the first face image based on the first sparse facial feature obtained by mapping the first face image and the second sparse facial feature of the second face image. This facial recognition device does not depend on acceleration of a GPU, reducing a requirement on a hardware device, increasing a facial recognition speed, and meeting a real-time requirement on facial recognition. In addition, the sparse representation method has a relatively low requirement on a data volume, so that an overfitting problem can be avoided.

Further, according to the second aspect, the mapping unit includes an obtaining subunit, a first mapping subunit, and a second mapping subunit. The obtaining subunit is configured to obtain a first dictionary corresponding to the modality of the first face image and a second dictionary corresponding to the modality of the second face image. The first mapping subunit is configured to map the first face image to the cross-modal space based on the first dictionary corresponding to the modality of the first face image, to obtain the first sparse facial feature of the first face image in the cross-modal space. The second mapping subunit is configured to map the second face image to the cross-modal space based on the second dictionary corresponding to the modality of the second face image, to obtain the second sparse facial feature of the second face image in the cross-modal space.

Further, according to the second aspect, the obtaining subunit is specifically configured to: obtain a feature representation matrix of the face image sample in the cross-modal space based on the first facial feature, the second facial feature, and an initialization dictionary by using a matching pursuit MP algorithm, where the first facial feature is a facial feature of the face image sample in the modality of the first face image, and the second facial feature is a facial feature of the face image sample in the modality of the second face image; and determine, based on the first facial feature, the second facial feature, and the feature representation matrix by using a method of optimal directions MOD algorithm, the first dictionary corresponding to the modality of the first face image and the second dictionary corresponding to the modality of the second face image. According to this device, the first dictionary corresponding to the modality of the first face image and the second dictionary corresponding to the modality of the second face image may be determined at the same time, so that a facial recognition speed is increased.

With reference to the second aspect, in an optional implementation, the obtaining subunit is specifically configured to solve a formula $\hat{x}_i = arg_x^{min}\left\|y_i - D_{(0)}x\right\|_2^2 \; subject \; to\|x\|_n \leq K$ by using the matching pursuit MP algorithm, to obtain the feature representation matrix of the face image sample in the cross-modal space, where $1<i<M$, $y_i$ is an $i^{th}$ column vector in a matrix $Y$ including the first facial feature and the second facial feature, the first row vector to an $M^{th}$ row vector in the matrix $Y$ are the first facial feature, an $(M+1)^{th}$ row vector to a $(2M)^{th}$ row vector are the second facial feature, $\hat{x}_i$ is an $i^{th}$ column vector in the feature representation matrix in the cross-modal space, $D_{(0)}$ is the initialization dictionary, n represents a constraint manner of sparsing, and $K$ is sparsity.

With reference to the second aspect, in an optional implementation, the obtaining subunit is specifically configured to solve a formula $D = arg_X^{min}\|Y - DX\|_F^2 = YX^T(XX^T)^{-1}$ by using the method of optimal directions MOD algorithm, to obtain the first dictionary corresponding to the modality of the first face image and the second dictionary corresponding to the modality of the second face image, where $D$ is a matrix including the first dictionary corresponding to the modality of the first face image and the second dictionary corresponding to the modality of the second face image, and $X$ is the feature representation matrix.

With reference to the second aspect, in an optional implementation, $D$ includes M column vectors and 2M row vectors, a matrix including the first row vector to an $M^{th}$ row vector is the first dictionary corresponding to the modality of the first face image, and a matrix including an $(M+1)^{th}$ row vector to a $(2M)^{th}$ row vector is the second dictionary corresponding to the modality of the second face image.

With reference to the second aspect, in an optional implementation, the first mapping subunit is specifically configured to: determine, based on the first dictionary corresponding to the modality of the first face image and a penalty coefficient, a first projection matrix corresponding to the modality of the first face image; and calculate the first sparse facial feature of the first face image in the cross-modal space by using the first projection matrix corresponding to the modality of the first face image and the first face image.

With reference to the second aspect, in an optional implementation, the second mapping subunit is specifically configured to: determine, based on the second dictionary corresponding to the modality of the second face image and the penalty coefficient, a second projection matrix corresponding to the modality of the second face image; and calculate the second sparse facial feature of the second face image in the cross-modal space by using the second projection matrix corresponding to the modality of the second face image and the second face image.

With reference to the second aspect, in an optional implementation, the determining unit is specifically configured to: separately transform the first face image and the second face image from a red-green-blue RGB color space to a YCbCr space of a luma component, a blue-difference chroma component, and a red-difference chroma component; determine a color coefficient value of the first face image and a color coefficient value of the second face image based on a value of the first face image in the YCbCr space and a value of the second face image in the YCbCr space; and determine, based on the color coefficient value of the first face image and the color coefficient value of the second face image, that the modality of the first face image is not the same as the modality of the second face image.

With reference to the second aspect, in an optional implementation, that the modality of the first face image is different from the modality of the second face image means that one of the color coefficient value of the first face image and the color coefficient value of the second face image is greater than a first threshold, and the other color coefficient value is not greater than the first threshold.

With reference to the second aspect, in an optional implementation, the sparsing is a manner of representing an original face image feature by using a linear combination of column vectors selected from a dictionary, and a manner of selecting a column vector is one of 0-norm constraint, 1-norm constraint, and 2-norm constraint.

With reference to the second aspect, in an optional implementation, the sparsing is a manner of representing an original face image feature by using a linear combination of column vectors selected from a dictionary, and a manner of selecting a column vector is the 2-norm constraint. In this manner, in a solving process, the 2-norm constraint is used to loosen a limitation on sparsing, so that an analytical solution exists for formula calculation, a problem of a relatively long operation time caused by a plurality of iterative solving processes is avoided, and a dictionary obtaining speed is further increased.

With reference to the second aspect, in an optional implementation, the recognition unit is specifically configured to: calculate a similarity between the first sparse facial feature and the second sparse facial feature; and if the similarity is greater than a similarity threshold, determine that a facial recognition result is success; or if the similarity is less than or equal to the similarity threshold, determine that the facial recognition result of the first face image is failure.

According to a third aspect, an embodiment of this application provides another device, including a processor and a memory. The processor and the memory are connected to each other, the memory is configured to store program instructions, and the processor is configured to invoke the program instructions in the memory to perform the method described in any one of the first aspect and the possible implementations of the first aspect.

According to a fourth aspect, an embodiment of this application provides a computer-readable storage medium. The computer storage medium stores program instructions, and when the program instructions are run on a processor, the processor performs the method described in any one of the first aspect and the possible implementations of the first aspect.

According to a fifth aspect, an embodiment of this application provides a computer program. When the computer program runs on a processor, the processor performs the method described in any one of the first aspect and the possible implementations of the first aspect.

According to the embodiments of this application, the first face image and the second face image in different modalities may be mapped to the same cross-modal space by using the sparse representation method, and then facial recognition is performed on the first face image based on the first sparse facial feature obtained by mapping the first face image and the second sparse facial feature of the second face image. This facial recognition manner does not depend on acceleration of a GPU, reducing a requirement on a hardware device, increasing a facial recognition speed, and meeting a real-time requirement on facial recognition. In addition, the sparse representation method has a relatively low requirement on a data volume, so that an overfitting problem can be avoided.

## BRIEF DESCRIPTION OF DRAWINGS

To describe the technical solutions in the embodiments of this application or in the prior art more clearly, the following briefly describes the accompanying drawings for describing the embodiments or the prior art.

FIG. 1 is a schematic architectural diagram of a facial recognition system according to an embodiment of this application;
FIG. 2 is a schematic diagram of obtaining a face image according to an embodiment of this application;
FIG. 3 is another schematic diagram of obtaining a face image according to an embodiment of this application;
FIG. 4 is a flowchart of a facial recognition method according to an embodiment of this application;
FIG. 5 is a flowchart of another facial recognition method according to an embodiment of this application;
FIG. 6 is a schematic diagram of a facial recognition device according to an embodiment of this application; and
FIG. 7 is a schematic diagram of another facial recognition device according to an embodiment of this application.

**DESCRIPTION OF EMBODIMENTS**

The following describes the technical solutions in the embodiments of this application in detail.

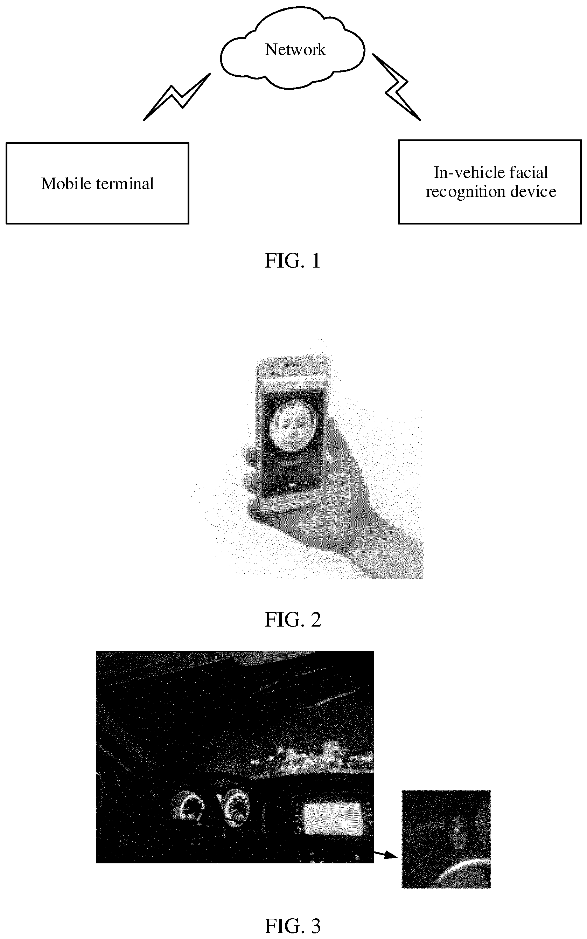

FIG. 1 is a schematic architectural diagram of a facial recognition system according to an embodiment of this application. The system includes a mobile terminal and an in-vehicle facial recognition device, and the mobile terminal may communicate with the facial recognition device by using a network. Specifically, a visible light camera is usually disposed on the mobile terminal, and may obtain a face image of a user in a visible light modality. FIG. 2 is a schematic diagram of obtaining a face image according to an embodiment of this application. The obtained face image is a face image in the visible light modality, and the user may use the face image to perform identity enrollment and identity authentication. The mobile terminal may send the face image to the in-vehicle facial recognition device by using the network for storage. Correspondingly, the in-vehicle facial recognition device may receive, by using the network, the face image sent by the mobile terminal.

A near-infrared camera is disposed on the in-vehicle facial recognition device, and is configured to collect a face image of the user in a frequently occurring in-vehicle scenario of poor lighting in a garage or at night, for example. The face image obtained by the in-vehicle facial recognition system is a face image in a near-infrared modality. FIG. 3 is another schematic diagram of obtaining a face image according to an embodiment of this application. The face image obtained by the in-vehicle facial recognition system is a face image in the near-infrared modality. The in-vehicle facial recognition device compares the obtained current face image of the user with a stored face image, to perform facial recognition. Specifically, facial recognition may be used to verify whether the current user succeeds in identity authentication, to improve vehicle security; and facial recognition may also be used to determine an identity of the user, to perform a personalized service (for example, adjusting a seat, playing music in a dedicated music library, or enabling vehicle application permission) corresponding to the identity of the user.

In an optional implementation, the system may further include a decision device, and the decision device is configured to perform a corresponding operation based on a facial recognition result of the in-vehicle facial recognition device. For example, an operation such as starting a vehicle or starting an in-vehicle air conditioner may be performed based on a result that verification succeeds in facial recognition. The personalized service (for example, adjusting a seat, playing music in a dedicated music library, or enabling in-vehicle application permission) corresponding to the identity of the user may be further performed based on the identity that is of the user and that is determined through facial recognition.

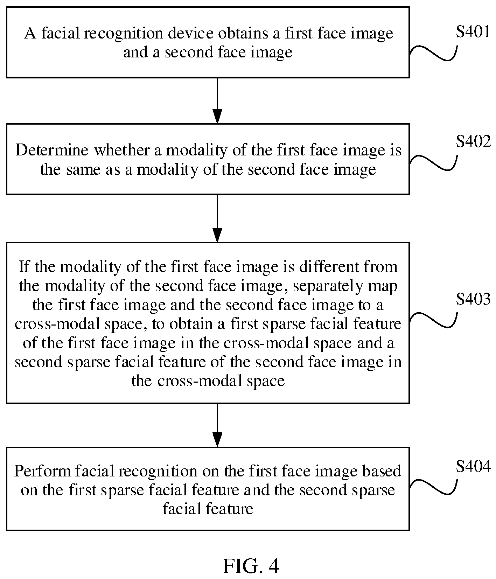

FIG. 4 is a flowchart of a facial recognition method according to an embodiment of this application. The method may be implemented based on the architecture shown in FIG. 1. The following facial recognition device may be the in-vehicle facial recognition device in the system architecture shown in FIG. 1. The method includes but is not limited to the following steps.

S401. The facial recognition device obtains a first face image and a second face image.

Specifically, after a user enters a vehicle, the facial recognition device may collect the current first face image of the user by using a disposed near-infrared camera; or after the user triggers identity verification for a personalized service (for example, adjusting a seat, playing music in a dedicated music library, or enabling in-vehicle application permission), the facial recognition device may collect the current first face image of the user by using the disposed near-infrared camera.

The second face image is a stored reference face image. The second face image may be a face image that is previously photographed and stored by the facial recognition device, a face image that is received by the facial recognition device and that is sent and stored by another device (for example, a mobile terminal), a face image that is read from another storage medium and stored by the facial recognition device, or the like. The second face image may have a correspondence with an identity of a character, and the second face image may also have a correspondence with the personalized service.

S402. Determine that a modality of the first face image is not the same as a modality of the second face image.

Specifically, that the modality of the first face image is different from the modality of the second face image means that one of a color coefficient value of the first face image and a color coefficient value of the second face image is greater than a first threshold, and the other color coefficient value is not greater than the first threshold.

S403. If the modality of the first face image is different from the modality of the second face image, separately map the first face image and the second face image to a cross-modal space, to obtain a first sparse facial feature of the first face image in the cross-modal space and a second sparse facial feature of the second face image in the cross-modal space.

The cross-modal space is a color space in which both the feature of the first face image and the feature of the second face image may be represented. Conventionally, when the modality of the first face image is different from the modality of the second face image, the first face image and second face image are usually directly recognized by using a convolutional neural network. In this manner, acceleration of a GPU is required, and calculation is slow on a device without a GPU. Consequently, a real-time requirement cannot be met. In addition, a parameter of the convolutional neural network needs to be constantly adjusted, and a large quantity of training samples are required. Therefore, overfitting of the network tends to occur. In this application, the first face image and the second face image are separately mapped to the cross-modal space, and the first sparse facial feature and the second sparse facial feature that are obtained through mapping are compared, to perform facial recognition. This manner depends on neither the convolutional neural network nor the acceleration of a GPU, increasing a facial recognition speed, and meeting a real-time requirement on facial recognition. In addition, a sparse representation method has a relatively low requirement on a data volume, so that an overfitting problem can be avoided.

S404. Perform facial recognition on the first face image based on the first sparse facial feature and the second sparse facial feature.

Optionally, the performing facial recognition on the first face image based on the first sparse facial feature and the second sparse facial feature includes: calculating a similarity between the first sparse facial feature and the second sparse facial feature; and if the similarity is greater than a similarity threshold, determining that a facial recognition result is success; or if the similarity is less than or equal to the similarity threshold, determining that the facial recognition result of the first face image is failure. The similarity threshold may be calibrated through an experiment.

It should be noted that when the modality of the first face image is different from the modality of the second face image, the foregoing manner may be used as a reference to map the face images in different modalities to the cross-modal space and then compare the sparse facial features obtained through mapping, to obtain the facial recognition result. The modality of the first face image is a near-infrared modality, and the modality of the second face image is a visible light modality. In other examples that are not according to the claims, the modality of the first face image may be a two-dimensional (two-dimensional, 2D) modality, and the modality of the second face image may be a three-dimensional (three-dimensional, 3D) modality; the modality of the first face image may be a low-precision modality, and the modality of the second face image may be a high-precision modality; or the like.

According to the method shown in FIG. 4, the first face image and the second face image in different modalities may be mapped to the same cross-modal space by using the sparse representation method, and then facial recognition is performed on the first face image based on the first sparse facial feature obtained by mapping the first face image and the second sparse facial feature of the second face image. This facial recognition manner does not depend on acceleration of a GPU, reducing a requirement on a hardware device, increasing a facial recognition speed, and meeting a real-time requirement on facial recognition. In addition, the sparse representation method has a relatively low requirement on a data volume, so that an overfitting problem can be avoided.

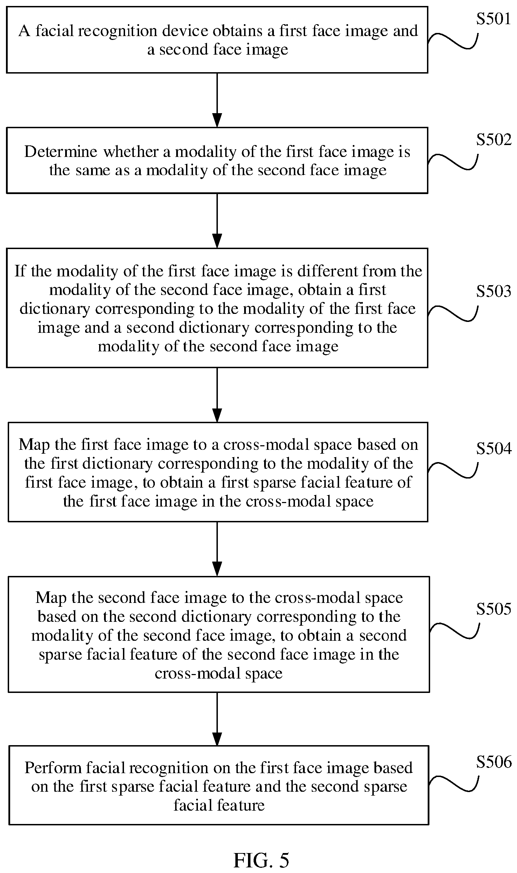

FIG. 5 is a flowchart of another facial recognition method according to an embodiment of this application. The method may be implemented based on the architecture shown in FIG. 1. The following facial recognition device may be the in-vehicle facial recognition device in the system architecture shown in FIG. 1. The method includes but is not limited to the following steps.

S501. The facial recognition device obtains a first face image and a second face image.

Specifically, after a user enters a vehicle, the facial recognition device may collect the current first face image of the user by using a disposed near-infrared camera; or after the user triggers identity verification for a personalized service (for example, adjusting a seat, playing music in a dedicated music library, or enabling in-vehicle application permission), the facial recognition device may collect the current first face image of the user by using the disposed near-infrared camera.

The second face image is a stored reference face image. The second face image may be a face image that is previously photographed and stored by the facial recognition device, a face image that is received by the facial recognition device and that is sent and stored by another device (for example, a mobile terminal), a face image that is read from another storage medium and stored by the facial recognition device, or the like. The second face image may have a correspondence with an identity of a character, and the second face image may also have a correspondence with the personalized service.

Optionally, after obtaining the first face image and the second face image, the facial recognition device preprocesses the first face image and the second face image. The preprocessing includes size adjustment processing and standardization processing. Through the preprocessing, face image data obtained through processing conforms to a standard normal distribution, in other words, a mean is 0, and a standard deviation is 1. A standardization processing manner may be shown in a formula 1-1:

$$x = (x - \mu)/\sigma \qquad\qquad\qquad 1\text{-}1$$

In the formula 1-1, $\mu$ is a mean corresponding to a modality of a face image, $\sigma$ is a standard deviation corresponding to the modality of the face image, and values of $\mu$ and $\sigma$ corresponding to different modalities are different. For example, if the first face image is preprocessed, $\mu$ in the formula 1-1 is a mean corresponding to a modality of the first face image, and $\sigma$ in the formula 1-1 is a standard deviation corresponding to the modality of the first face image. The mean corresponding to the modality of the first face image and the standard deviation corresponding to the modality of the first face image may be calibrated through an experiment, and the mean corresponding to the modality of the first face image and the standard deviation corresponding to the modality of the first face image may be obtained by performing calculation processing on a plurality of face image samples in modalities of a plurality of first face images. A mean corresponding to a modality of the second face image and a standard deviation corresponding to the modality of the second face image may be obtained according to a same manner. Details are not described herein again.

S502. Determine that the modality of the first face image is not the same as the modality of the second face image.

Specifically, a specific implementation of determining that the modality of the first face image is not the same as the modality of the second face image is as follows:

(1) Separately transform the first face image and the second face image from a red-green-blue RGB color space to a YCbCr space of a luma component, a blue-difference chroma component, and a red-difference chroma component.

Specifically, a manner of transforming a face image from the red-green-blue RGB color space to the YCbCr space of the luma component, the blue-difference chroma component, and the red-difference chroma component may be shown in the following formula 1-2:

$$\begin{bmatrix} Y \\ C_b \\ C_r \end{bmatrix} = \begin{bmatrix} 16 \\ 128 \\ 128 \end{bmatrix} + \frac{1}{256} \times \begin{bmatrix} 65.738 & 129.057 & 25.064 \\ -37.945 & -74.494 & 112.439 \\ 112.439 & -94.154 & -18.285 \end{bmatrix} \times \begin{bmatrix} R \\ G \\ B \end{bmatrix} \qquad 1\text{-}2$$

In the formula 1-2, R represents a value of a red channel of a pixel in the face image, G represents a value of a green channel of the pixel, B represents a value of a blue channel of the pixel, Y represents a luma component value of the pixel, $C_b$ represents a blue-difference chroma component value of the pixel, and $C_r$ represents a red-difference chroma component value of the pixel.

(2) Determine a color coefficient value of the first face image and a color coefficient value of the second face image based on a value of the first face image in the YCbCr space and a value of the second face image in the YCbCr space.

Specifically, a manner of calculating a color coefficient value of a face image may be shown in a formula 1-3:

$$y = \frac{1}{2n} \left( \sum_{i=1}^{n} \left( e^{\frac{1}{256} c_{bi}} - 1 \right) + \sum_{i=1}^{n} \left( e^{\frac{1}{256} c_{ri}} - 1 \right) \right) \qquad 1\text{-}3$$

In the formula 1-3, y represents the color coefficient value of the face image, which can represent a modal feature of the face image, n represents a quantity of pixels in the face image, and $c_{ri}$ is a red-difference chroma component value of an $i^{th}$ pixel in the face image, and $c_{bi}$ is a blue-difference chroma component value of an $i^{th}$ pixel in the face image.

(3) Determine, based on the color coefficient value of the first face image and the color coefficient value of the second face image, that the modality of the first face image is not the same as the modality of the second face image.

Specifically, that the modality of the first face image is different from the modality of the second face image means that one of the color coefficient value of the first face image and the color coefficient value of the second face image is greater than a first threshold, and the other color coefficient value is not greater than the first threshold.

If a color coefficient value of a face image is greater than the first threshold, the face image is an image in a visible light modality. If a color coefficient value of a face image is not greater than the first threshold, the face image is an image in a near-infrared modality. The first threshold is a value calibrated in an experiment. For example, the first threshold may be 0.5.

S503. If the modality of the first face image is different from the modality of the second face image, obtain a first dictionary corresponding to the modality of the first face image and a second dictionary corresponding to the modality of the second face image.

A sparse representation method for representing a feature of a face image is first described. Sparsing is a manner of representing an original face image feature by using a linear combination of column vectors selected from a dictionary, and a manner of selecting a column vector is one of 0-norm constraint, 1-norm constraint, and 2-norm constraint.

The following describes a method for obtaining the first dictionary corresponding to the modality of the first face image and the second dictionary corresponding to the modality of the second face image. The method includes but is not limited to the following steps.

(1) Construct a cross-modal initialization dictionary D(0).

A value in the initialization dictionary D(0) may be a randomly generated value, or may be a value generated based on a sample randomly selected from a face image sample. After the cross-modal initialization dictionary is constructed, columns of the cross-modal initialization dictionary D(0) are normalized. Specifically, the face image sample includes a plurality of samples.

(2) Assume that k=0, and cyclically perform a procedure A until $Y - D_{(k)}X_{(K)}$ is less than a second threshold. In this case, $D_{(k)}$ is D.

$Y$ is a feature representation matrix of the face image sample. Specifically, $Y = \begin{bmatrix} Y_V \\ Y_N \end{bmatrix}$, where $Y_V$ is a facial feature of the face image sample in the modality of the first face image, and $Y_N$ is a facial feature of the face image sample in the modality of the second face image. The first row vector to an $M^{th}$ row vector in $Y$ are the first facial feature $Y_V$, and an $(M+1)^{th}$ row vector to a $(2M)^{th}$ row vector are the second facial feature $Y_N$. Specifically, one column vector in $Y_V$ represents a feature of one sample in the modality of the first face image, and one column vector in $Y_N$ represents a feature of one sample in the modality of the second face image.

D is a matrix including the first dictionary corresponding to the modality of the first face image and the second dictionary corresponding to the modality of the second face image. Specifically, $D = \begin{bmatrix} D_V \\ D_N \end{bmatrix}$, where $D_V$ is the first dictionary corresponding to the modality of the first face image, and $D_N$ is the second dictionary corresponding to the modality of the second face image. $D$ includes M column vectors and 2M row vectors, a matrix including the first row vector to an $M^{th}$ row vector is the first dictionary corresponding to the modality of the first face image, and a matrix including an $(M+1)^{th}$ row vector to a $(2M)^{th}$ row vector is the second dictionary corresponding to the modality of the second face image. $X_{(k)}$ is a feature representation matrix of the face image sample in the cross-modal space.

$D_{(k)}X_{(K)}$ represents a sparse facial feature obtained by mapping the face image sample to the cross-modal space, $Y$ - $D_{(k)}X_{(K)}$ represents a difference between a feature of the face image sample and the sparse facial feature obtained by mapping the face image sample to the cross-modal space, and a smaller difference indicates better performance of the first dictionary and the second dictionary.

Specifically, the procedure A is as follows:

1.

$$k=k+1.$$

2. Obtain the feature representation matrix of the face image sample in the cross-modal space based on the first facial feature, the second facial feature, and the initialization dictionary by using a matching pursuit (matching pursuit, MP) algorithm, where the first facial feature is a facial feature of the face image sample in the modality of the first face image, and the second facial feature is a facial feature of the face image sample in the modality of the second face image.

Specifically, the following formula 1-4 may be solved by using the MP algorithm, to obtain the feature representation matrix $X_{(k)}$ of the face image sample in the cross-modal space. The formula 1-4 is:

$$\hat{x}_i = arg_x^{min} \left\| y_i - D_{(k-1)}x \right\|_2^2 \ subject \ to \|x\|_n \leq K, \ 1<i<M \qquad\qquad 1\text{-}4$$

In the formula 1-4, $y_i$ is an $i^{th}$ column vector in the feature representation matrix $Y$ of the face image sample, and the feature representation matrix $Y$ of the face image sample includes a total of M column vectors. Specifically, the feature representation matrix $X_{(k)}$ of the face image sample in the cross-modal space includes $\hat{x}_i$, where $1<i<M$. $K$ is sparsity, and $D_{(k-1)}$ is a matrix that is obtained after the $(k-1)^{th}$ update and that includes the first dictionary corresponding to the modality of the first face image and the second dictionary corresponding to the modality of the second face image.

n represents a constraint manner of sparsing, and a value of n is one of 0, 1, and 2. Specifically, when the value of n is 0, the constraint manner of sparsing is the 0-norm constraint, and $\|x\|_0 \leq K$ indicates that a quantity of elements that are not 0 in x is less than or equal to the sparsity K. When the value of n is 1, the constraint manner of sparsing is the 1-norm constraint, and $\|x\|_1 \leq K$ indicates that a sum of absolute values of elements in x is less than or equal to the sparsity K. When the value of n is 2, the constraint manner of sparsing is the 2-norm constraint, and $\|x\|_2 \leq K$ indicates that a sum of squares of elements in $x$ is less than or equal to the sparsity K. Specifically, using the solving manner of the 2-norm constraint to find a sparse facial feature of a face image can loosen a limitation on sparsing, so that an analytical solution exists for formula calculation, a problem of a relatively long operation time caused by a plurality of iterative solving processes is avoided, and a dictionary obtaining speed is further increased.

3. Determine, based on the facial feature of the face image sample in the modality of the first face image, the facial feature of the face image sample in the modality of the second face image, and the feature representation matrix by using a method of optimal directions (method of optimal directions, MOD) algorithm, the first dictionary corresponding to the modality of the first face image and the second dictionary corresponding to the modality of the second face image.

Specifically, the first dictionary corresponding to the modality of the first face image and the second dictionary corresponding to the modality of the second face image may be determined according to a formula 1-5. The formula 1-5 is:

$$D_{(k)} = arg_X^{min} \left\| Y - DX_{(k-1)} \right\|_F^2 = YX_{(K)}^T (X_{(K)} X_{(K)}^T)^{-1} \qquad \text{1-5}$$

In the formula 1-5, $F$ is a matrix norm, and $X_{(k-1)}$ is a feature representation matrix, in the cross-modal space, obtained after the (k-1)th update. $D_{(k)}$ is a matrix that is obtained after the $k^{th}$ update and that includes the first dictionary corresponding to the modality of the first face image and the second dictionary corresponding to the modality of the second face image.

According to the foregoing method, the first dictionary corresponding to the modality of the first face image and the second dictionary corresponding to the modality of the second face image may be obtained at the same time, thereby reducing an operation time and increasing a dictionary obtaining speed. In addition, in a solving process, the 2-norm constraint may be used to loosen a limitation on sparsing, so that an analytical solution exists for formula calculation, a problem of a relatively long operation time caused by a plurality of iterative solving processes is avoided, and a dictionary obtaining speed is further increased

S504. Map the first face image to the cross-modal space based on the first dictionary corresponding to the modality of the first face image, to obtain a first sparse facial feature of the first face image in the cross-modal space.

Specifically, a manner of mapping the first face image to the cross-modal space based on the first dictionary corresponding to the modality of the first face image, to obtain the first sparse facial feature of the first face image in the cross-modal space is: determining, based on the first dictionary corresponding to the modality of the first face image and a penalty coefficient, a cross-modal projection matrix corresponding to the modality of the first face image; and calculating the first sparse facial feature of the first face image in the cross-modal space by using the cross-modal projection matrix corresponding to the modality of the first face image and the first face image.

A calculation manner of determining, based on the first dictionary corresponding to the modality of the first face image and the penalty coefficient, the cross-modal projection matrix corresponding to the modality of the first face image may be shown in a formula 1-6:

$$P_a = (\lambda \cdot I + D_V^T D_V)^{-1} D_V^T \qquad \text{1-6}$$

In the formula 1-6, $D_V$ is the first dictionary corresponding to the modality of the first face image, $P_a$ is the cross-modal projection matrix corresponding to the modality of the first face image, $\lambda$ is the penalty coefficient, is related to the sparsity, and may be calibrated through an experiment, and I is an identity matrix.

Specifically, a calculation manner of calculating the first sparse facial feature of the first face image in the cross-modal space by using the cross-modal projection matrix corresponding to the modality of the first face image and the first face image may be shown in a formula 1-7:

$$A_i = P_a y_{ai}, \ 1 < i < M \qquad \text{1-7}$$

In the formula 1-7, $A_i$ is the first sparse facial feature of the first face image in the cross-modal space, $y_{ai}$ is the $i^{th}$ column vector in a feature representation matrix of the first face image, and $P_a$ is the cross-modal projection matrix corresponding to the modality of the first face image.

S505. Map the second face image to the cross-modal space based on the second dictionary corresponding to the modality of the second face image, to obtain a second sparse facial feature of the second face image in the cross-modal space.

Specifically, a manner of mapping the second face image to the cross-modal space based on the second dictionary corresponding to the modality of the second face image, to obtain the second sparse facial feature of the second face image in the cross-modal space is: determining, based on the second dictionary corresponding to the modality of the second face image and the penalty coefficient, a cross-modal projection matrix corresponding to the modality of the second face image; and calculating the second sparse facial feature of the second face image in the cross-modal space by using the cross-modal projection matrix corresponding to the modality of the second face image and the second face image.

A calculation manner of determining, based on the second dictionary corresponding to the modality of the second face image and the penalty coefficient, the cross-modal projection matrix corresponding to the modality of the second face image may be shown in a formula 1-8:

$$P_b = (\lambda \cdot I + D_N^T D_N)^{-1} D_N^T \qquad \text{1-8}$$

In the formula 1-8, $D_N$ is the second dictionary corresponding to the modality of the second face image, $P_b$ is the cross-modal projection matrix corresponding to the modality of the first face image, $\lambda$ is the penalty coefficient, is related to the sparsity, and may be calibrated through an experiment, and $I$ is an identity matrix.

Specifically, a calculation manner of calculating the second sparse facial feature of the second face image in the cross-modal space by using the cross-modal projection matrix corresponding to the modality of the second face image and the second face image may be shown in a formula 1-9:

$$B_i = P_b y_{bi}, \ 1 < i < M \hspace{3cm} \text{1-9}$$

In the formula 1-9, $B_i$ is the second sparse facial feature of the second face image in the cross-modal space, $y_{bi}$ is an $i^{th}$ column vector in a feature representation matrix of the second face image, and $P_b$ is the cross-modal projection matrix corresponding to the modality of the second face image.

S506. Perform facial recognition on the first face image based on the first sparse facial feature and the second sparse facial feature.

Specifically, the performing facial recognition on the first face image based on the first sparse facial feature and the second sparse facial feature includes: calculating a similarity between the first sparse facial feature and the second sparse facial feature; and if the similarity is greater than a similarity threshold, determining that a facial recognition result is success; or if the similarity is less than or equal to the similarity threshold, determining that the facial recognition result of the first face image is failure. The similarity threshold may be calibrated through an experiment.

Optionally, a manner of calculating the similarity between the first sparse facial feature and the second sparse facial feature may be calculating a cosine distance between the first sparse facial feature and the second sparse facial feature. A manner of calculating the cosine distance between the first sparse facial feature and the second sparse facial feature may be shown in a formula 1-10:

$$cos\theta = \frac{\sum_1^n (A_i * B_i)}{\sqrt{\sum_1^n A_i^2} * \sqrt{\sum_1^n B_i^2}}, \ 1 < i < M \hspace{2cm} \text{1-10}$$

In the formula 1-10, $A_i$ is the first sparse facial feature of the first face image in the cross-modal space, $B_i$ is the second sparse facial feature of the second face image in the cross-modal space, and n represents a dimension of a sparse feature. It should be noted that the similarity between the first sparse facial feature and the second sparse facial feature may be calculated in another manner, and this is not limited herein.

According to the method shown in FIG. 5, the first face image and the second face image in different modalities may be mapped to the same cross-modal space by using the sparse representation method, and then facial recognition is performed on the first face image based on the first sparse facial feature obtained by mapping the first face image and the second sparse facial feature of the second face image. This facial recognition manner does not depend on acceleration of a GPU, reducing a requirement on a hardware device, increasing a facial recognition speed, and meeting a real-time requirement on facial recognition. In addition, the sparse representation method has a relatively low requirement on a data volume, so that an overfitting problem can be avoided.

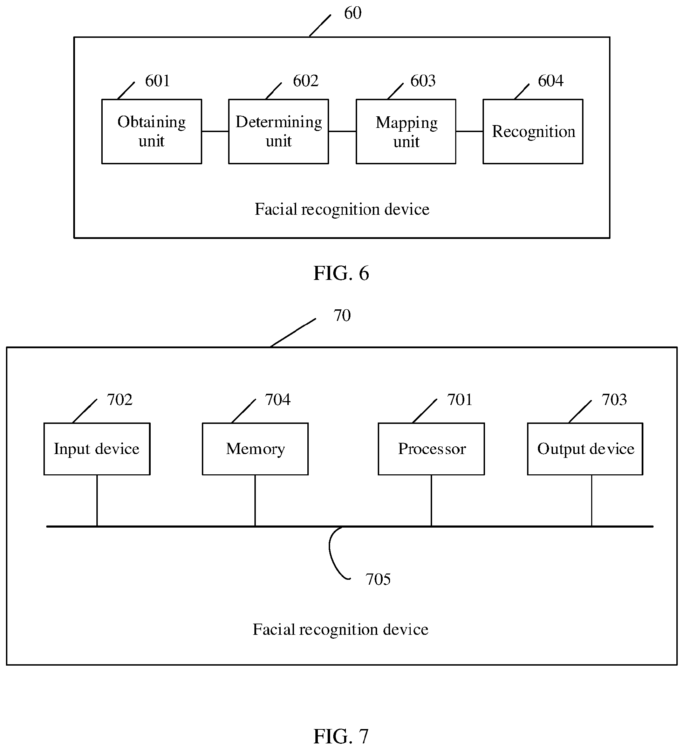

FIG. 6 is a schematic diagram of a facial recognition device according to an embodiment of this application. The facial recognition device 60 includes an obtaining unit 601, a determining unit 602, a mapping unit 603, and a recognition unit 604. The following describes these units.

The obtaining unit 601 is configured to obtain a first face image and a second face image. The first face image is a current face image obtained by a camera, the second face image is a stored reference face image, a modality of the first face image is a near-infrared modality, and a modality of the second face image is a visible light modality.

The determining unit 602 is configured to determine that the modality of the first face image is not the same as the modality of the second face image.

The mapping unit 603 is configured to: when the modality of the first face image is different from the modality of the second face image, separately map the first face image and the second face image to a cross-modal space, to obtain a first sparse facial feature of the first face image in the cross-modal space and a second sparse facial feature of the second face image in the cross-modal space. The cross-modal space is a color space in which both the feature of the first face image and the feature of the second face image may be represented.

The recognition unit 604 is configured to perform facial recognition on the first face image based on the first sparse facial feature and the second sparse facial feature.

According to this device, the first face image and the second face image in different modalities may be mapped to the same cross-modal space by using a sparse representation method, and then facial recognition is performed on the first face image based on the first sparse facial feature obtained by mapping the first face image and the second sparse facial feature of the second face image. This facial recognition device does not depend on acceleration of a GPU, reducing a requirement on a hardware device, increasing a facial recognition speed, and meeting a real-time requirement on facial recognition. In addition, the sparse representation method has a relatively low requirement on a data volume, so that an overfitting problem can be avoided.

The mapping unit includes an obtaining subunit, a first mapping subunit, and a second mapping subunit. The obtaining subunit is configured to obtain a first dictionary corresponding to the modality of the first face image and a second dictionary corresponding to the modality of the second face image. The first mapping subunit is configured to map the first face image to the cross-modal space based on the first dictionary corresponding to the modality of the first face image, to obtain the first sparse facial feature of the first face image in the cross-modal space. The second mapping subunit is configured to map the second face image to the cross-modal space based on the second dictionary corresponding to the modality of the second face image, to obtain the second sparse facial feature of the second face image in the cross-modal space.

The obtaining subunit is specifically configured to: obtain a feature representation matrix of the face image sample in the cross-modal space based on the first facial feature, the second facial feature, and an initialization dictionary by using a matching pursuit MP algorithm, where the first facial feature is a facial feature of the face image sample in the modality of the first face image, and the second facial feature is a facial feature of the face image sample in the modality of the second face image; and determine, based on the first facial feature, the second facial feature, and the feature representation matrix by using a method of optimal directions MOD algorithm, the first dictionary corresponding to the modality of the first face image and the second dictionary corresponding to the modality of the second face image. According to this device, the first dictionary corresponding to the modality of the first face image and the second dictionary corresponding to the modality of the second face image may be determined at the same time, so that a facial recognition speed is increased.

In an optional implementation, the obtaining subunit is specifically configured to solve a formula $\hat{x}_i = arg_x^{min} \|y_i - D_{(0)}x\|_2^2 \ subject \ to \|x\|_n \le K$ by using the matching pursuit MP algorithm, to obtain the feature representation matrix of the face image sample in the cross-modal space, where $1 < i < M$, $y_i$ is an $i$th column vector in a matrix $Y$ including the first facial feature and the second facial feature, the first row vector to an $M$th row vector in the matrix $Y$ are the first facial feature, an $(M+1)$th row vector to a $(2M)$th row vector are the second facial feature, $\hat{x}_i$ is an $i$th column vector in the feature representation matrix in the cross-modal space, $D_{(0)}$ is the initialization dictionary, n represents a constraint manner of sparsing, and $K$ is sparsity.

In an optional implementation, the obtaining subunit is specifically configured to solve a formula $D = arg_X^{min} \|Y - DX\|_F^2 = YX^T(XX^T)^{-1}$ by using the method of optimal directions MOD algorithm, to obtain the first dictionary corresponding to the modality of the first face image and the second dictionary corresponding to the modality of the second face image, where $D$ is a matrix including the first dictionary corresponding to the modality of the first face image and the second dictionary corresponding to the modality of the second face image, and $X$ is the feature representation matrix.

In an optional implementation, $D$ includes M column vectors and 2M row vectors, a matrix including the first row vector to an $M$th row vector is the first dictionary corresponding to the modality of the first face image, and a matrix including an $(M+1)$th row vector to a $(2M)$th row vector is the second dictionary corresponding to the modality of the second face image.

In an optional implementation, the first mapping subunit is specifically configured to: determine, based on the first dictionary corresponding to the modality of the first face image and a penalty coefficient, a first projection matrix corresponding to the modality of the first face image; and calculate the first sparse facial feature of the first face image in the cross-modal space by using the first projection matrix corresponding to the modality of the first face image and the first face image.

In an optional implementation, the second mapping subunit is specifically configured to: determine, based on the second dictionary corresponding to the modality of the second face image and the penalty coefficient, a second projection matrix corresponding to the modality of the second face image; and calculate the second sparse facial feature of the second face image in the cross-modal space by using the second projection matrix corresponding to the modality of the second face image and the second face image.

In an optional implementation, the determining unit is specifically configured to: separately transform the first face image and the second face image from a red-green-blue RGB color space to a YCbCr space of a luma component, a blue-difference chroma component, and a red-difference chroma component; determine a color coefficient value of the first face image and a color coefficient value of the second face image based on a value of the first face image in the YCbCr space and a value of the second face image in the YCbCr space; and determine, based on the color coefficient value of the first face image and the color coefficient value of the second face image, that the modality of the first face image is not the same as the modality of the second face image.

In an optional implementation, that the modality of the first face image is different from the modality of the second face image means that one of the color coefficient value of the first face image and the color coefficient value of the second face image is greater than a first threshold, and the other color coefficient value is not greater than the first threshold.

In an optional implementation, the sparsing is a manner of representing an original face image feature by using a linear combination of column vectors selected from a dictionary, and a manner of selecting a column vector is one of 0-norm constraint, 1-norm constraint, and 2-norm constraint.

In an optional implementation, the sparsing is a manner of representing an original face image feature by using a linear combination of column vectors selected from a dictionary, and a manner of selecting a column vector is the 2-norm constraint. In this manner, in a solving process, the 2-norm constraint is used to loosen a limitation on sparsing, so that an analytical solution exists for formula calculation, a problem of a relatively long operation time caused by a plurality of iterative solving processes is avoided, and a dictionary obtaining speed is further increased.

In an optional implementation, the recognition unit is specifically configured to: calculate a similarity between the first sparse facial feature and the second sparse facial feature; and if the similarity is greater than a similarity threshold, determine that a facial recognition result is success; or if the similarity is less than or equal to the similarity threshold, determine that the facial recognition result of the first face image is failure.

For implementation of each operation in FIG. 6, further correspondingly refer to the corresponding descriptions in the method embodiment shown in FIG. 4 or FIG. 5.

According to the facial recognition device shown in FIG. 6, the first face image and the second face image in different modalities may be mapped to the same cross-modal space by using the sparse representation method, and then facial recognition is performed on the first face image based on the first sparse facial feature obtained by mapping the first face image and the second sparse facial feature of the second face image. This facial recognition manner does not depend on acceleration of a GPU, reducing a requirement on a hardware device, increasing a facial recognition speed, and meeting a real-time requirement on facial recognition. In addition, the sparse representation method has a relatively low requirement on a data volume, so that an overfitting problem can be avoided.

FIG. 7 is a schematic diagram of another facial recognition device according to an embodiment of this application. The first device 70 may include one or more processors 701, one or more input devices 702, one or more output devices 703, and a memory 704. The processor 701, the input device 702, the output device 703, and the memory 704 are connected by using a bus 705. The memory 704 is configured to store instructions.

The processor 701 may be a central processing unit, or the processor may be another general-purpose processor, a digital signal processor, an application-specific integrated circuit, another programmable logic device, or the like. The general purpose processor may be a microprocessor, or the processor may be any conventional processor or the like.

The input device 702 may include a communications interface, a data cable, and the like, and the output device 703 may include a display (for example, an LCD), a speaker, a data cable, a communications interface, and the like.

The memory 704 may include a read-only memory and a random access memory, and provide instructions and data to the processor 701. A part of the memory 704 may further include a non-volatile random access memory. For example, the memory 704 may further store information of a device type.

The processor 701 is configured to run the instructions stored in the memory 704 to perform the following operations:

obtaining a first face image and a second face image, where the first face image is a current face image obtained by a camera, the second face image is a stored reference face image, a modality of the first face image is a near-infrared modality, and a modality of the second face image is a visible light modality;

determining that the modality of the first face image is not the same as the modality of the second face image;

if the modality of the first face image is different from the modality of the second face image, separately mapping the first face image and the second face image to a cross-modal space, to obtain a first sparse facial feature of the first face image in the cross-modal space and a second sparse facial feature of the second face image in the cross-modal space, where the cross-modal space is a color space in which both the feature of the first face image and the feature of the second face image may be represented; and

performing facial recognition on the first face image based on the first sparse facial feature and the second sparse facial feature.

The processor 701 is specifically configured to: obtain a first dictionary corresponding to the modality of the first face image and a second dictionary corresponding to the modality of the second face image; map the first face image to a cross-modal space based on the first dictionary corresponding to the modality of the first face image, to obtain a first sparse facial feature of the first face image in the cross-modal space; and map the second face image to the cross-modal space based on the second dictionary corresponding to the modality of the second face image, to obtain a second sparse facial feature of the second face image in the cross-modal space.

The processor 701 is specifically configured to: obtain a feature representation matrix of the face image sample in the cross-modal space based on the first facial feature, the second facial feature, and an initialization dictionary by using a matching pursuit MP algorithm, where the first facial feature is a facial feature of the face image sample in the modality of the first face image, and the second facial feature is a facial feature of the face image sample in the modality of the second face image; and determine, based on the first facial feature, the second facial feature, and the feature representation matrix by using a method of optimal directions MOD algorithm, the first dictionary corresponding to the modality of the first face image and the second dictionary corresponding to the modality of the second face image. According to this device, the first dictionary corresponding to the modality of the first face image and the second dictionary corresponding to the modality of the second face image may be determined at the same time, so that a facial recognition speed is increased.

In an optional implementation, the processor 701 is specifically configured to solve a formula $\hat{x}_i = arg_x^{min}\|y_i - D_{(0)}x\|_2^2 \; subject\, to\|x\|_n \leq K$ by using the matching pursuit MP algorithm, to obtain the feature representation matrix of the face image sample in the cross-modal space, where $1<i<M$, $y_i$ is an $i$th column vector in a matrix $Y$ including the first facial feature and the second facial feature, the first row vector to an $M$th row vector in the matrix $Y$ are the first facial feature, an $(M+1)$th row vector to a $(2M)$th row vector are the second facial feature, $\hat{x}_i$ is an $i$th column vector in the feature representation matrix in the cross-modal space, $D_{(0)}$ is the initialization dictionary, n represents a constraint manner of sparsing, and $K$ is sparsity.

In an optional implementation, the processor 701 is specifically configured to solve a formula $D = arg_X^{min}\|Y - DX\|_F^2 = YX^T(XX^T)^{-1}$ by using the method of optimal directions MOD algorithm, to obtain the first dictionary corresponding to the modality of the first face image and the second dictionary corresponding to the modality of the second face image, where $D$ is a matrix including the first dictionary corresponding to the modality of the first face image and the second dictionary corresponding to the modality of the second face image, and $X$ is the feature representation matrix.

In an optional implementation, $D$ includes M column vectors and 2M row vectors, a matrix including the first row vector to an $M$th row vector is the first dictionary corresponding to the modality of the first face image, and a matrix including an $(M+1)$th row vector to a $(2M)$th row vector is the second dictionary corresponding to the modality of the second face image.

In an optional implementation, the processor 701 is specifically configured to: determine, based on the first dictionary corresponding to the modality of the first face image and a penalty coefficient, a first projection matrix corresponding to the modality of the first face image; and calculate the first sparse facial feature of the first face image in the cross-modal space by using the first projection matrix corresponding to the modality of the first face image and the first face image.

In an optional implementation, the processor 701 is specifically configured to: determine, based on the second dictionary corresponding to the modality of the second face image and the penalty coefficient, a second projection matrix corresponding to the modality of the second face image; and calculate the second sparse facial feature of the second face image in the cross-modal space by using the second projection matrix corresponding to the modality of the second face image and the second face image.

In an optional implementation, the processor 701 is specifically configured to: separately transform the first face image and the second face image from a red-green-blue RGB color space to a YCbCr space of a luma component, a blue-difference chroma component, and a red-difference chroma component; determine a color coefficient value of the first face image and a color coefficient value of the second face image based on a value of the first face image in the YCbCr space and a value of the second face image in the YCbCr space; and determine, based on the color coefficient value of the first face image and the color coefficient value of the second face image, that the modality of the first face image is not the same as the modality of the second face image.

In an optional implementation, that the modality of the first face image is different from the modality of the second face image means that one of the color coefficient value of the first face image and the color coefficient value of the second face image is greater than a first threshold, and the other color coefficient value is not greater than the first threshold.

In an optional implementation, the sparsing is a manner of representing an original face image feature by using a linear combination of column vectors selected from a dictionary, and a manner of selecting a column vector is one of 0-norm constraint, 1-norm constraint, and 2-norm constraint.

In an optional implementation, the sparsing is a manner of representing an original face image feature by using a linear combination of column vectors selected from a dictionary, and a manner of selecting a column vector is the 2-norm constraint. In this manner, in a solving process, the 2-norm constraint is used to loosen a limitation on sparsing, so that an analytical solution exists for formula calculation, a problem of a relatively long operation time caused by a plurality of iterative solving processes is avoided, and a dictionary obtaining speed is further increased.

In an optional implementation, the processor 701 is specifically configured to: calculate a similarity between the first sparse facial feature and the second sparse facial feature; and if the similarity is greater than a similarity threshold, determine that a facial recognition result is success; or if the similarity is less than or equal to the similarity threshold, determine that the facial recognition result of the first face image is failure.

For implementation of each operation in FIG. 7, further correspondingly refer to the corresponding descriptions in the method embodiment shown in FIG. 4 or FIG. 5.

According to the facial recognition device shown in FIG. 7, the first face image and the second face image in different modalities may be mapped to the same cross-modal space by using a sparse representation method, and then facial recognition is performed on the first face image based on the first sparse facial feature obtained by mapping the first face image and the second sparse facial feature of the second face image. This facial recognition manner does not depend on acceleration of a GPU, reducing a requirement on a hardware device, increasing a facial recognition speed, and meeting a real-time requirement on facial recognition. In addition, the sparse representation method has a relatively low requirement on a data volume, so that an overfitting problem can be avoided.

Another embodiment of the present invention provides a computer program product. When the computer program product runs on a computer, the method in the embodiment shown in FIG. 4 or FIG. 5 is implemented.

Another embodiment of the present invention provides a computer-readable storage medium. The computer-readable storage medium stores a computer program, and when the computer program is executed by a computer, the method in the embodiment shown in FIG. 4 or FIG. 5 is implemented.

**Claims**

1. A facial recognition method, comprising:

   obtaining (S401) a first face image and a second face image, wherein the first face image is a current face image obtained by a camera, the second face image is a stored reference face image, a modality of the first face image is a near-infrared modality, and a modality of the second face image is a visible light modality;
   determining (S402) that the modality of the first face image is not the same as the modality of the second face image;
   separately mapping (S403) the first face image and the second face image to a cross-modal space, to obtain a first sparse facial feature of the first face image in the cross-modal space and a second sparse facial feature of the second face image in the cross-modal space, where the cross-modal space is a color space in which both a feature of the first face image and a feature of the second face image may be represented; and
   performing (S404) facial recognition on the first face image based on the first sparse facial feature and the second sparse facial feature;
   wherein the separately mapping (S403) the first face image and the second face image to a cross-modal space, to obtain a first sparse facial feature of the first face image in the cross-modal space and a second sparse facial feature of the second face image in the cross-modal space comprises:

      obtaining (S503) a first dictionary corresponding to the modality of the first face image and a second dictionary corresponding to the modality of the second face image;
      mapping (S504) the first face image to the cross-modal space based on the first dictionary corresponding to the modality of the first face image, to obtain the first sparse facial feature of the first face image in the cross-modal space; and
      mapping (S505) the second face image to the cross-modal space based on the second dictionary corresponding to the modality of the second face image, to obtain the second sparse facial feature of the second face image in the cross-modal space; and
      wherein the obtaining (S503) a first dictionary corresponding to the modality of the first face image and a second dictionary corresponding to the modality of the second face image comprises:

         obtaining a feature representation matrix of a face image sample in the cross-modal space based on a first facial feature, a second facial feature, and an initialization dictionary by using a matching pursuit algorithm, wherein the first facial feature is a facial feature of the face image sample in the modality of the first face image, and the second facial feature is a facial feature of the face image sample in the modality of the second face image; and
         determining, based on the first facial feature, the second facial feature, and the feature representation matrix by using a method of optimal directions algorithm, the first dictionary corresponding to the modality of the first face image and the second dictionary corresponding to the modality of the second face image.

2. The method according to claim 1, wherein the determining (S402) that the modality of the first face image is not the same as the modality of the second face image comprises:

   transforming the first face image and the second face image respectively from a red-green-blue RGB color space to a YCbCr space of a luma component, a blue-difference chroma component, and a red-difference chroma component;

determining a color coefficient value of the first face image and a color coefficient value of the second face image based on a value of the first face image in the YCbCr space and a value of the second face image in the YCbCr space; and

determining, based on the color coefficient value of the first face image and the color coefficient value of the second face image, that the modality of the first face image is not the same as the modality of the second face image.

3. The method according to any one of claims 1 to 2, wherein that the modality of the first face image is different from the modality of the second face image means that one of the color coefficient value of the first face image and the color coefficient value of the second face image is greater than a first threshold, and the other color coefficient value is not greater than the first threshold.

4. The method according to any one of claims 1 to 3, wherein the sparsing is a manner of representing an original face image feature by using a linear combination of column vectors selected from a dictionary, and a manner of selecting a column vector is one of 0-norm constraint, 1-norm constraint, and 2-norm constraint.

5. The method according to any one of claims 1 to 4, wherein the performing facial recognition on the first face image based on the first sparse facial feature and the second sparse facial feature comprises:

calculating a similarity between the first sparse facial feature and the second sparse facial feature; and
if the similarity is greater than a similarity threshold, determining that a facial recognition result of the first face image is success; or
if the similarity is less than or equal to the similarity threshold, determining that the facial recognition result of the first face image is failure.

6. A facial recognition device (60), comprising an obtaining unit (601), a determining unit (602), a mapping unit (603), and a recognition unit (604), wherein

the obtaining unit (601) is configured to obtain (S401) a first face image and a second face image, wherein the first face image is a current face image obtained by a camera, the second face image is a stored reference face image, a modality of the first face image is a near-infrared modality, and a modality of the second face image is a visible light modality;
the determining unit (602) is configured to determine (S402) that the modality of the first face image is not the same as the modality of the second face image;
the mapping unit (603) is configured to map (S403) the first face image and the second face image to a cross-modal space respectively, to obtain a first sparse facial feature of the first face image in the cross-modal space and a second sparse facial feature of the second face image in the cross-modal space, where the cross-modal space is a color space in which both a feature of the first face image and a feature of the second face image may be represented; and
the recognizing unit is configured to perform (S404) facial recognition on the first face image based on the first sparse facial feature and the second sparse facial feature;
wherein the mapping unit (603) comprises an obtaining subunit, a first mapping subunit, and a second mapping subunit, wherein
the obtaining subunit is configured to obtain (S503) a first dictionary corresponding to the modality of the first face image and a second dictionary corresponding to the modality of the second face image;
the first mapping subunit is configured to map (S504) the first face image to the cross-modal space based on the first dictionary corresponding to the modality of the first face image, to obtain the first sparse facial feature of the first face image in the cross-modal space; and
the second mapping subunit is configured to map (S505) the second face image to the cross-modal space based on the second dictionary corresponding to the modality of the second face image, to obtain the second sparse facial feature of the second face image in the cross-modal space; and
wherein the obtaining subunit is configured to:

obtain a feature representation matrix of a face image sample in the cross-modal space based on a first facial feature, a second facial feature, and an initialization dictionary by using a matching pursuit algorithm, wherein the first facial feature is a facial feature of the face image sample in the modality of the first face image, and the second facial feature is a facial feature of the face image sample in the modality of the second face image; and determine, based on the first facial feature, the second facial feature, and the feature representation matrix by using a method of optimal directions, the first dictionary corresponding to the modality of the first face image and the second dictionary corresponding to the modality of the second face image.

7. The device (60) according to claim 6, wherein the determining unit (602) is configured to:

   transform the first face image and the second face image respectively from a red-green-blue RGB color space to a YCbCr space consisting of a luma component, a blue-difference chroma component, and a red-difference chroma component;
   determine a color coefficient value of the first face image and a color coefficient value of the second face image based on a value of the first face image in the YCbCr space and a value of the second face image in the YCbCr space; and
   determine, based on the color coefficient value of the first face image and the color coefficient value of the second face image, that the modality of the first face image is not the same as the modality of the second face image.

8. The device (60) according to any one of claims 6 to 7, wherein the modality of the first face image is different from the modality of the second face image means that one of the color coefficient value of the first face image and the color coefficient value of the second face image is greater than a first threshold, and the other color coefficient value is not greater than the first threshold.

9. The device (60) according to any one of claims 6 to 8, wherein sparing is a manner of representing an original face image feature by using a linear combination of column vectors selected from a dictionary, and a manner of selecting a column vector is one of 0-norm constraint, 1-norm constraint, and 2-norm constraint.

10. The device (60) according to any one of claims 6 to 9, wherein the recognition unit (604) is configured to:

    calculate a similarity between the first sparse facial feature and the second sparse facial feature; and
    if the similarity is greater than a similarity threshold, determine that a facial recognition result of the first face image is success; or
    if the similarity is less than or equal to the similarity threshold, determine that the facial recognition result of the first face image is failure.

11. A computer-readable storage medium, wherein the computer-readable storage medium stores program instructions, and when the program instructions are run on a processor, the processor is enabled to perform the method according to any one of claims 1 to 5.

**Patentansprüche**

1. Gesichtserkennungsverfahren, umfassend:

   Erlangen (S401) eines ersten Gesichtsbildes und eines zweiten Gesichtsbildes, wobei das erste Gesichtsbild ein aktuelles Gesichtsbild ist, das von einer Kamera erlangt wird, das zweite Gesichtsbild ein gespeichertes Referenzgesichtsbild ist, eine Modalität des ersten Gesichtsbildes eine Nahinfrarotmodalität ist und eine Modalität des zweiten Gesichtsbildes eine sichtbare Lichtmodalität ist;
   Bestimmen (S402), dass die Modalität des ersten Gesichtsbildes nicht dieselbe ist wie die Modalität des zweiten Gesichtsbildes; separates Abbilden (S403) des ersten Gesichtsbildes und des zweiten Gesichtsbildes in einen modalitätsübergreifenden Raum, um ein erstes spärliches Gesichtsmerkmal des ersten Gesichtsbildes in dem modalitätsübergreifenden Raum und ein zweites spärliches Gesichtsmerkmal des zweiten Gesichtsbildes in dem modalitätsübergreifenden Raum zu erlangen, wobei der modalitäts-übergreifende Raum ein Farbraum ist, in dem sowohl ein Merkmal des ersten Gesichtsbildes als auch ein Merkmal des zweiten Gesichtsbildes dargestellt werden können; und
   Durchführen (S404) einer Gesichtserkennung auf dem ersten Gesichtsbild basierend auf dem ersten spärlichen Gesichtsmerkmal und dem zweiten spärlichen Gesichtsmerkmal;
   wobei das separate Abbilden (S403) des ersten Gesichtsbildes und des zweiten Gesichtsbildes in einen modalitätsübergreifenden Raum, um ein erstes spärliches Gesichtsmerkmal des ersten Gesichtsbildes in dem modalitätsübergreifenden Raum und ein zweites spärliches Gesichtsmerkmal des zweiten Gesichtsbildes in dem modalitätsübergreifenden Raum zu erlangen, Folgendes umfasst:

Erlangen (S503) eines ersten Verzeichnisses, das der Modalität des ersten Gesichtsbildes entspricht, und eines zweiten Verzeichnisses, das der Modalität des zweiten Gesichtsbildes entspricht;
Abbilden (S504) des ersten Gesichtsbildes auf den modalitätsübergreifenden Raum basierend auf dem ersten Verzeichnis, das der Modalität des ersten Gesichtsbildes entspricht, um das erste spärliche Gesichtsmerkmal des ersten Gesichtsbildes im modalitätsübergreifenden Raum zu erlangen; und
Abbilden (S505) des zweiten Gesichtsbildes auf den modalitätsübergreifenden Raum basierend auf dem zweiten Verzeichnis, das der Modalität des zweiten Gesichtsbildes entspricht, um das zweite spärliche Gesichtsmerkmal des zweiten Gesichtsbildes im modalitätsübergreifenden Raum zu erlangen; und
wobei das Erlangen (S503) eines ersten Verzeichnisses, das der Modalität des ersten Gesichtsbildes entspricht, und eines zweiten Verzeichnisses, das der Modalität des zweiten Gesichtsbildes entspricht, Folgendes umfasst:

Erlangen einer Merkmalsdarstellungsmatrix einer Gesichtsbildprobe in dem modalitätsübergreifenden Raum basierend auf einem ersten Gesichtsmerkmal, einem zweiten Gesichtsmerkmal und einem Initialisierungsverzeichnis unter Verwendung eines Matching-Pursuit-Algorithmus, wobei das erste Gesichtsmerkmal ein Gesichtsmerkmal der Gesichtsbildprobe in der Modalität des ersten Gesichtsbildes ist und das zweite Gesichtsmerkmal ein Gesichtsmerkmal der Gesichtsbildprobe in der Modalität des zweiten Gesichtsbildes ist; und
Bestimmen des zweiten Gesichtsmerkmals und der Merkmalsdarstellungsmatrix basierend auf dem ersten Gesichtsmerkmal unter Verwendung eines Verfahrens eines Optimalrichtungsalgorithmus, wobei das erste Verzeichnis der Modalität des ersten Gesichtsbildes entspricht und das zweite Verzeichnis der Modalität des zweiten Gesichtsbildes entspricht.

2. Verfahren nach Anspruch 1, wobei das Bestimmen (S402), dass die Modalität des ersten Gesichtsbildes nicht dieselbe ist wie die Modalität des zweiten Gesichtsbildes, Folgendes umfasst:

Transformieren des ersten Gesichtsbildes und des zweiten Gesichtsbildes jeweils von einem Rot-Grün-Blau-(RGB-)Farbraum in einen YCbCr-Farbraum einer Luma-Komponente, einer Blau-Unterschied-Chroma-Komponente und einer Rot-Unterschied-Chroma-Komponente;
Bestimmen eines Farbkoeffizientenwertes des ersten Gesichtsbildes und eines Farbkoeffizientenwertes des zweiten Gesichtsbildes basierend auf einem Wert des ersten Gesichtsbildes in dem YCbCr-Raum und einem Wert des zweiten Gesichtsbildes in dem YCbCr-Raum; und
Bestimmen, dass die Modalität des ersten Gesichtsbildes nicht dieselbe ist wie die Modalität des zweiten Gesichtsbildes, basierend auf dem Farbkoeffizientenwert des ersten Gesichtsbildes und dem Farbkoeffizientenwert des zweiten Gesichtsbildes.

3. Verfahren nach einem der Ansprüche 1 bis 2, wobei die Tatsache, dass sich die Modalität des ersten Gesichtsbildes von der Modalität des zweiten Gesichtsbildes unterscheidet, bedeutet, dass einer der Farbkoeffizientenwerte des ersten Gesichtsbildes und der Farbkoeffizientenwerte des zweiten Gesichtsbildes größer als ein erster Schwellenwert ist und der andere Farbkoeffizientenwert nicht größer als der erste Schwellenwert ist.

4. Verfahren nach einem der Ansprüche 1 bis 3, wobei das Sparsing eine Art der Darstellung eines ursprünglichen Gesichtsbildmerkmals durch Verwendung einer linearen Kombination von Spaltenvektoren ist, die aus einem Verzeichnis ausgewählt sind, und eine Art des Auswählens eines Spaltenvektors eine von 0-Norm-Beschränkung, 1-Norm-Beschränkung und 2-Norm-Beschränkung ist.

5. Verfahren nach einem der Ansprüche 1 bis 4, wobei das Durchführen der Gesichtserkennung an dem ersten Gesichtsbild basierend auf dem ersten spärlichen Gesichtsmerkmal und dem zweiten spärlichen Gesichtsmerkmal Folgendes umfasst:

Berechnen einer Ähnlichkeit zwischen dem ersten spärlichen Gesichtsmerkmal und dem zweiten spärlichen Gesichtsmerkmal; und
wenn die Ähnlichkeit größer als ein Ähnlichkeitsschwellenwert ist, Bestimmen, dass ein Gesichtserkennungsergebnis des ersten Gesichtsbildes erfolgreich ist; oder
wenn die Ähnlichkeit kleiner oder gleich dem Ähnlichkeitsschwellenwert ist, Bestimmen, dass das Gesichtserkennungsergebnis des ersten Gesichtsbildes fehlgeschlagen ist.

6. Gesichtserkennungsvorrichtung (60), umfassend eine Erlangungseinheit (601), eine Bestimmungseinheit (602), eine Abbildungseinheit (603) und eine Erkennungseinheit (604), wobei

die Erlangungseinheit (601) zum Erlangen (S401) eines ersten Gesichtsbildes und eines zweiten Gesichtsbildes konfiguriert ist, wobei das erste Gesichtsbild ein aktuelles Gesichtsbild ist, das von einer Kamera erlangt wird, das zweite Gesichtsbild ein gespeichertes Referenzgesichtsbild ist, eine Modalität des ersten Gesichtsbildes eine Nahinfrarotmodalität ist und eine Modalität des zweiten Gesichtsbildes eine sichtbare Lichtmodalität ist;

die Bestimmungseinheit (602) zum Bestimmen (S402), dass die Modalität des ersten Gesichtsbildes nicht dieselbe ist wie die Modalität des zweiten Gesichtsbildes, konfiguriert ist;

die Abbildungseinheit (603) zum separaten Abbilden (S403) des ersten Gesichtsbildes und des zweiten Gesichtsbildes jeweils in einen modalitätsübergreifenden Raum konfiguriert ist, um ein erstes spärliches Gesichtsmerkmal des ersten Gesichtsbildes in dem modalitätsübergreifenden Raum und ein zweites spärliches Gesichtsmerkmal des zweiten Gesichtsbildes in dem modalitätsübergreifenden Raum zu erlangen, wobei der modalitätsübergreifende Raum ein Farbraum ist, in dem sowohl ein Merkmal des ersten Gesichtsbildes als auch ein Merkmal des zweiten Gesichtsbildes dargestellt werden können; und

die Erkennungseinheit zum Durchführen (S404) einer Gesichtserkennung auf dem ersten Gesichtsbild basierend auf dem ersten spärlichen Gesichtsmerkmal und dem zweiten spärlichen Gesichtsmerkmal konfiguriert ist; wobei die Abbildungseinheit (603) eine Erlangungseinheit, eine erste Abbildungsteileinheit und eine zweite Abbildungsteileinheit umfasst, wobei

die Erlangungsteileinheit zum Erlangen (S503) eines ersten Verzeichnisses, das der Modalität des ersten Gesichtsbildes entspricht, und eines zweiten Verzeichnisses, das der Modalität des zweiten Gesichtsbildes entspricht, konfiguriert ist;

die erste Abbildungsteileinheit zum Abbilden (S504) des ersten Gesichtsbildes auf den modalitätsübergreifenden Raum basierend auf dem ersten Verzeichnis, das der Modalität des ersten Gesichtsbildes entspricht, konfiguriert ist, um das erste spärliche Gesichtsmerkmal des ersten Gesichtsbildes im modalitätsübergreifenden Raum zu erlangen; und

die zweite Abbildungsteileinheit zum Abbilden (S505) des zweiten Gesichtsbildes auf den modalitätsübergreifenden Raum basierend auf dem zweiten Verzeichnis, das der Modalität des zweiten Gesichtsbildes entspricht, konfiguriert ist, um das zweite spärliche Gesichtsmerkmal des zweiten Gesichtsbildes im modalitätsübergreifenden Raum zu erlangen; und

wobei die Erlangungsteileinheit zu Folgendem konfiguriert ist:

Erlangen einer Merkmalsdarstellungsmatrix einer Gesichtsbildprobe in dem modalitätsübergreifenden Raum basierend auf einem ersten Gesichtsmerkmal, einem zweiten Gesichtsmerkmal und einem Initialisierungsverzeichnis unter Verwendung eines Matching-Pursuit-Algorithmus, wobei das erste Gesichtsmerkmal ein Gesichtsmerkmal der Gesichtsbildprobe in der Modalität des ersten Gesichtsbildes ist und das zweite Gesichtsmerkmal ein Gesichtsmerkmal der Gesichtsbildprobe in der Modalität des zweiten Gesichtsbildes ist; und

Bestimmen des zweiten Gesichtsmerkmals und der Merkmalsdarstellungsmatrix basierend auf dem ersten Gesichtsmerkmal unter Verwendung eines Verfahrens von Optimalrichtungen, wobei das erste Verzeichnis der Modalität des ersten Gesichtsbildes entspricht und das zweite Verzeichnis der Modalität des zweiten Gesichtsbildes entspricht.

7. Vorrichtung (60) nach Anspruch 6, wobei die Bestimmungseinheit (602) zu Folgendem konfiguriert ist:

Transformieren des ersten Gesichtsbildes und des zweiten Gesichtsbildes jeweils von einem Rot-Grün-Blau-(RGB-)Farbraum in einen YCbCr-Farbraum bestehend aus einer Luma-Komponente, einer Blau-Unterschied-Chroma-Komponente und einer Rot-Unterschied-Chroma-Komponente;

Bestimmen eines Farbkoeffizientenwertes des ersten Gesichtsbildes und eines Farbkoeffizientenwertes des zweiten Gesichtsbildes basierend auf einem Wert des ersten Gesichtsbildes in dem YCbCr-Raum und einem Wert des zweiten Gesichtsbildes in dem YCbCr-Raum; und

Bestimmen, dass die Modalität des ersten Gesichtsbildes nicht dieselbe ist wie die Modalität des zweiten Gesichtsbildes, basierend auf dem Farbkoeffizientenwert des ersten Gesichtsbildes und dem Farbkoeffizientenwert des zweiten Gesichtsbildes.

8. Vorrichtung (60) nach einem der Ansprüche 6 bis 7, wobei die Tatsache, dass sich die Modalität des ersten Gesichtsbildes von der Modalität des zweiten Gesichtsbildes unterscheidet, bedeutet, dass einer der Farbkoeffizientenwerte des ersten Gesichtsbildes und der Farbkoeffizientenwerte des zweiten Gesichtsbildes größer als ein erster Schwellenwert ist und der andere Farbkoeffizientenwert nicht größer als der erste Schwellenwert ist.

9. Vorrichtung (60) nach einem der Ansprüche 6 bis 8, wobei Sparsing eine Art der Darstellung eines ursprünglichen Gesichtsbildmerkmals durch Verwendung einer linearen Kombination von Spaltenvektoren ist, die aus einem Verzeichnis ausgewählt sind, und eine Art des Auswählens eines Spaltenvektors eine von 0-Norm-Beschränkung, 1-Norm-Beschränkung und 2-Norm-Beschränkung ist.

10. Vorrichtung (60) nach einem der Ansprüche 6 bis 9, wobei die Erkennungseinheit (604) zu Folgendem konfiguriert ist:

Berechnen einer Ähnlichkeit zwischen dem ersten spärlichen Gesichtsmerkmal und dem zweiten spärlichen Gesichtsmerkmal; und
wenn die Ähnlichkeit größer als ein Ähnlichkeitsschwellenwert ist, Bestimmen, dass ein Gesichtserkennungsergebnis des ersten Gesichtsbildes erfolgreich ist; oder
wenn die Ähnlichkeit kleiner oder gleich dem Ähnlichkeitsschwellenwert ist, Bestimmen, dass das Gesichtserkennungsergebnis des ersten Gesichtsbildes fehlgeschlagen ist.

11. Computerlesbares Speichermedium, wobei das computerlesbare Speichermedium Programmanweisungen speichert, und wenn die Programmanweisungen auf einem Prozessor ausgeführt werden, es dem Prozessor ermöglicht wird, das Verfahren nach einem der Ansprüche 1 bis 5 durchzuführen.

## Revendications

1. Procédé de reconnaissance faciale, comprenant :

l'obtention (S401) d'une première image faciale et d'une seconde image faciale, dans lequel la première image faciale est une image faciale actuelle obtenue par une caméra, la seconde image faciale est une image faciale de référence stockée, une modalité de la première image faciale est une modalité proche infrarouge, et une modalité de la seconde image faciale est une modalité de lumière visible ;
la détermination (S402) que la modalité de la première image faciale n'est pas la même que la modalité de la seconde image faciale ;
le mappage séparé (S403) de la première image faciale et de la seconde image faciale dans un espace intermodal, pour obtenir une première caractéristique faciale clairsemée de la première image faciale dans l'espace intermodal et une seconde caractéristique faciale clairsemée de la seconde image faciale dans l'espace intermodal, où l'espace intermodal est un espace colorimétrique dans lequel une caractéristique de la première image faciale et une caractéristique de la seconde image faciale peuvent être représentées ; et
la réalisation (S404) d'une reconnaissance faciale sur la première image faciale sur la base de la première caractéristique faciale clairsemée et de la seconde caractéristique faciale clairsemée ;
dans lequel le mappage séparé (S403) de la première image faciale et de la seconde image faciale dans un espace intermodal, pour obtenir une première caractéristique faciale clairsemée de la première image faciale dans l'espace intermodal et une seconde caractéristique faciale clairsemée de la seconde image faciale dans l'espace intermodal comprend :

l'obtention (S503) d'un premier dictionnaire correspondant à la modalité de la première image faciale et un second dictionnaire correspondant à la modalité de la seconde image faciale ;
le mappage (S504) de la première image faciale dans l'espace intermodal sur la base du premier dictionnaire correspondant à la modalité de la première image faciale, pour obtenir la première caractéristique faciale clairsemée de la première image faciale dans l'espace intermodal ; et
le mappage (S505) de la seconde image faciale dans l'espace intermodal sur la base du second dictionnaire correspondant à la modalité de la seconde image faciale, pour obtenir la seconde caractéristique faciale clairsemée de la seconde image faciale dans l'espace intermodal ; et
dans lequel l'obtention (S503) d'un premier dictionnaire correspondant à la modalité de la première image faciale et d'un second dictionnaire correspondant à la modalité de la seconde image faciale comprend ;
l'obtention d'une matrice de représentation de caractéristiques d'un échantillon d'image faciale dans l'espace intermodal sur la base d'une première caractéristique faciale, d'une seconde caractéristique faciale, et d'un dictionnaire d'initialisation à l'aide d'un algorithme de recherche de correspondance, dans lequel la première caractéristique faciale est une caractéristique faciale de l'échantillon d'image faciale dans la modalité de la première image faciale, et la seconde caractéristique faciale est une caractéristique faciale de l'échantillon d'image faciale dans la modalité de la seconde image faciale ; et

la détermination, sur la base de la première caractéristique faciale, de la seconde caractéristique faciale, et de la matrice de représentation de caractéristiques à l'aide d'un algorithme de la méthode des directions optimales, du premier dictionnaire correspondant à la modalité de la première image faciale et du second dictionnaire correspondant à la modalité de la seconde image faciale.

2. Procédé selon la revendication 1, dans lequel la détermination (S402) que la modalité de la première image faciale n'est pas la même que la modalité de la seconde image faciale comprend :

la transformation de la première image faciale et de la seconde image faciale respectivement d'un espace colorimétrique rouge-vert-bleu, RVB, en un espace YCbCr d'une composante de luminance, d'une composante chrominance bleu, et d'une composante chrominance rouge ;

la détermination d'une valeur de coefficient de couleur de la première image faciale et d'une valeur de coefficient de couleur de la seconde image faciale sur la base d'une valeur de la première image faciale dans l'espace YCbCr et d'une valeur de la seconde image faciale dans l'espace YCbCr ; et

la détermination, sur la base de la valeur de coefficient de couleur de la première image faciale et de la valeur de coefficient de couleur de la seconde image faciale, que la modalité de la première image faciale n'est pas la même que la modalité de la seconde image faciale.

3. Procédé selon l'une quelconque des revendications 1 à 2, dans lequel le fait que la modalité de la première image faciale est différente de la modalité de la seconde image faciale signifie qu'une des valeurs de coefficient de couleur de la première image faciale et de la valeur de coefficient de couleur de la seconde image faciale est supérieure à un premier seuil, et l'autre valeur de coefficient de couleur n'est pas supérieure au premier seuil.

4. Procédé selon l'une quelconque des revendications 1 à 3, dans lequel la fragmentation est une manière de représenter une caractéristique d'image faciale d'origine à l'aide d'une combinaison linéaire de vecteurs de colonne sélectionnés dans un dictionnaire, et une manière de sélectionner un vecteur de colonne est l'une des contraintes de norme 0, de norme 1, et de norme 2.

5. Procédé selon l'une quelconque des revendications 1 à 4, dans lequel la reconnaissance faciale réalisée sur la première image faciale sur la base de la première caractéristique faciale clairsemée et de la seconde caractéristique faciale clairsemée comprend :

le calcul d'une similarité entre le premier trait facial clairsemé et le second trait facial clairsemé ; et

si la similarité est supérieure à un seuil de similarité, la détermination qu'un résultat de reconnaissance faciale de la première image faciale est un succès ; ou

si la similarité est inférieure ou égale au seuil de similarité, la détermination que le résultat de la reconnaissance faciale de la première image faciale est un échec.

6. Dispositif de reconnaissance faciale (60), comprenant une unité d'obtention (601), une unité de détermination (602), une unité de mappage (603), et une unité de reconnaissance (604), dans lequel

l'unité d'obtention (601) est configurée pour obtenir (S401) une première image faciale et une seconde image faciale, dans lequel la première image faciale est une image faciale actuelle obtenue par une caméra, la seconde image faciale est une image faciale de référence stockée, une modalité de la première image faciale est une modalité proche infrarouge, et une modalité de la seconde image faciale est une modalité de lumière visible ;

l'unité de détermination (602) est configurée pour déterminer (S402) que la modalité de la première image faciale n'est pas la même que la modalité de la seconde image faciale ;

l'unité de mappage (603) est configurée pour mapper (S403) la première image faciale et la seconde image faciale dans un espace intermodal respectivement, pour obtenir une première caractéristique faciale clairsemée de la première image faciale dans l'espace intermodal et une seconde caractéristique faciale clairsemée de la seconde image faciale dans l'espace intermodal, où l'espace intermodal est un espace colorimétrique dans lequel une caractéristique de la première image faciale et une caractéristique de la seconde image faciale peuvent être représentées ; et

l'unité de reconnaissance est configurée pour réaliser (S404) une reconnaissance faciale sur la première image faciale sur la base de la première caractéristique faciale clairsemée et de la seconde caractéristique faciale clairsemée ;

dans lequel l'unité de mappage (603) comprend une sous-unité d'obtention, une première sous-unité de

22

mappage, et une seconde sous-unité de mappage, dans lequel

la sous-unité d'obtention est configurée pour obtenir (S503) un premier dictionnaire correspondant à la modalité de la première image faciale et un second dictionnaire correspondant à la modalité de la seconde image faciale ;

la première sous-unité de mappage est configurée pour mapper (S504) la première image faciale dans l'espace intermodal sur la base du premier dictionnaire correspondant à la modalité de la première image faciale, pour obtenir la première caractéristique faciale clairsemée de la première image faciale dans l'espace intermodal ; et

la seconde sous-unité de mappage est configurée pour mapper (S505) la seconde image faciale dans l'espace intermodal sur la base du second dictionnaire correspondant à la modalité de la seconde image faciale, pour obtenir la seconde caractéristique faciale clairsemée de la seconde image faciale dans l'espace intermodal ; et

dans lequel la sous-unité d'obtention est configurée pour :

obtenir une matrice de représentation de caractéristiques d'un échantillon d'image faciale dans l'espace intermodal sur la base d'une première caractéristique faciale, d'une seconde caractéristique faciale, et d'un dictionnaire d'initialisation à l'aide d'un algorithme de recherche de correspondance, dans lequel la première caractéristique faciale est une caractéristique faciale de l'échantillon d'image faciale dans la modalité de la première image faciale, et la seconde caractéristique faciale est une caractéristique faciale de l'échantillon d'image faciale dans la modalité de la seconde image faciale ; et

déterminer, sur la base de la première caractéristique faciale, de la seconde caractéristique faciale, et de la matrice de représentation de caractéristiques à l'aide d'une méthode des directions optimales, le premier dictionnaire correspondant à la modalité de la première image faciale et le second dictionnaire correspondant à la modalité de la seconde image faciale.

7. Dispositif (60) selon la revendication 6, dans lequel l'unité de détermination (602) est configurée pour :

transformer la première image faciale et la seconde image faciale respectivement d'un espace colorimétrique rouge-vert-bleu, RVB, en un espace YCbCr constitué d'une composante de luminance, d'une composante de chrominance bleu, et d'une composante chrominance rouge ;

déterminer une valeur de coefficient de couleur de la première image faciale et une valeur de coefficient de couleur de la seconde image faciale sur la base d'une valeur de la première image faciale dans l'espace YCbCr et d'une valeur de la seconde image faciale dans l'espace YCbCr ; et

déterminer, sur la base de la valeur de coefficient de couleur de la première image faciale et de la valeur de coefficient de couleur de la seconde image faciale, que la modalité de la première image faciale n'est pas la même que la modalité de la seconde image faciale.

8. Dispositif (60) selon l'une quelconque des revendications 6 et 7, dans lequel le fait que la modalité de la première image faciale est différente de la modalité de la seconde image faciale signifie qu'une des valeurs de coefficient de couleur de la première image faciale et de la valeur de coefficient de couleur de la seconde image faciale est supérieure à un premier seuil, et l'autre valeur de coefficient de couleur n'est pas supérieure au premier seuil.

9. Dispositif (60) selon l'une quelconque des revendications 6 à 8, dans lequel la fragmentation est une manière de représenter une caractéristique d'image faciale d'origine à l'aide d'une combinaison linéaire de vecteurs de colonne sélectionnés dans un dictionnaire, et une manière de sélectionner un vecteur de colonne est l'une des contraintes de norme 0, de norme 1, et de norme 2.

10. Dispositif (60) selon l'une quelconque des revendications 6 à 9, dans lequel l'unité de reconnaissance (604) est configurée pour :

calculer une similarité entre le premier trait facial clairsemé et le second trait facial clairsemé ; et

si la similarité est supérieure à un seuil de similarité, déterminer qu'un résultat de reconnaissance faciale de la première image faciale est un succès ; ou

si la similarité est inférieure ou égale au seuil de similarité, déterminer que le résultat de la reconnaissance faciale de la première image faciale est un échec.

11. Support de stockage lisible par ordinateur, dans lequel le support de stockage lisible par ordinateur stocke des instructions de programme, et lorsque les instructions de programme sont exécutées sur un processeur, le processeur est activé pour réaliser le procédé selon l'une quelconque des revendications 1 à 5.

FIG. 1

FIG. 2

FIG. 3

| A facial recognition device obtains a first face image and a second face image | S401 |

| Determine whether a modality of the first face image is the same as a modality of the second face image | S402 |

| If the modality of the first face image is different from the modality of the second face image, separately map the first face image and the second face image to a cross-modal space, to obtain a first sparse facial feature of the first face image in the cross-modal space and a second sparse facial feature of the second face image in the cross-modal space | S403 |

| Perform facial recognition on the first face image based on the first sparse facial feature and the second sparse facial feature | S404 |

FIG. 4

```
┌──────────────────────────────────────────────┐      S501
│ A facial recognition device obtains a first   │  ⌐⌐
│ face image and a second face image            │
└──────────────────────────────────────────────┘
                       │
                       ▼
┌──────────────────────────────────────────────┐      S502
│ Determine whether a modality of the first      │  ⌐⌐
│ face image is the same as a modality of the    │
│ second face image                              │
└──────────────────────────────────────────────┘
                       │
                       ▼
┌──────────────────────────────────────────────┐      S503
│ If the modality of the first face image is     │  ⌐⌐
│ different from the modality of the second face  │
│ image, obtain a first dictionary corresponding │
│ to the modality of the first face image and a  │
│ second dictionary corresponding to the         │
│ modality of the second face image              │
└──────────────────────────────────────────────┘
                       │
                       ▼
┌──────────────────────────────────────────────┐      S504
│ Map the first face image to a cross-modal space │  ⌐⌐
│ based on the first dictionary corresponding to  │
│ the modality of the first face image, to obtain │
│ a first sparse facial feature of the first face │
│ image in the cross-modal space                  │
└──────────────────────────────────────────────┘
                       │
                       ▼
┌──────────────────────────────────────────────┐      S505
│ Map the second face image to the cross-modal    │  ⌐⌐
│ space based on the second dictionary            │
│ corresponding to the modality of the second     │
│ face image, to obtain a second sparse facial    │
│ feature of the second face image in the         │
│ cross-modal space                               │
└──────────────────────────────────────────────┘
                       │
                       ▼
┌──────────────────────────────────────────────┐      S506
│ Perform facial recognition on the first face    │  ⌐⌐
│ image based on the first sparse facial feature  │
│ and the second sparse facial feature            │
└──────────────────────────────────────────────┘
```

FIG. 5

60

| Obtaining unit 601 | Determining unit 602 | Mapping unit 603 | Recognition 604 |

Facial recognition device

FIG. 6

70

| Input device 702 | Memory 704 | Processor 701 | Output device 703 |

705

Facial recognition device

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108256405 A

**Non-patent literature cited in the description**

- **C. REALE** ; **N. M. NASRABADI** ; **R. CHELLAPPA**. Coupled dictionaries for thermal to visible face recognition. *IEEE International Conference on Image Processing*, 27 October 2014, 328-332
- **B. MAILHÉ et al.** Fixed points of dictionary learning algorithms for sparse representations. *HAL open science hal-00807545*, April 2013
- **A. RAKOTOMAMONJY et al.** Greedy Greedy methods, randomization approaches and multi-arm bandit algorithms for efficient sparsity-constrained optimization. *HAL open science hal-01182801v1*, August 2015